# EUROPEAN PATENT APPLICATION

(11) **EP 3 808 225 A1**
(43) Date of publication of application: **21.04.2021**
(21) Application number: 19821665.7
(22) Date of filing: 14.06.2019
(51) Int. Cl.: A47F 7/00, B65G 1/137, G06Q 50/10

(54) **TOBACCO FIXTURE**

(30) Priority: 18.06.2018 JP 2018115583
(71) Applicant: Japan Tobacco Inc., Tokyo 105-6927 (JP)
(72) Inventor: OJIMA, Atsushi, Tokyo 105-8422 (JP)
(74) Representative: Hoffmann Eitle
(86) International application number: PCT/JP2019/023740
(87) International publication number: WO 2019/244800

(57) **Abstract**

A tobacco fixture (100) is provided with: a plurality of accommodating areas (magazines (15)) each accommodating a plurality of tobacco products (11) so as to be removable by an operator; a brand designating information acquisition unit which acquires brand designating information designating a brand of the tobacco products (11); an image projection unit (projector (20)) which projects an image and thereby provides a display in an image projected range; and a projection control unit (control unit (22)) which performs operation control for the image projection unit. The projection control unit provides control to cause the image projection unit to provide a display corresponding to the brand designating information acquired by the brand designating information acquisition unit.

## Description

### Technical Field

The present invention relates to a tobacco fixture.

### Background Art

In a shop such as a general convenience store or the like, tobacco products of various brands are displayed by brand in a so-called tobacco fixture. That is, in the tobacco fixture, an accommodating area is set for each brand of tobacco products, and a tobacco product of a corresponding brand is accommodated in each accommodating area. Here, the term "tobacco product" does not mean each individual cigarette for smoking, but means a rectangular-parallelepiped-shaped package that accommodates a plurality of cigarettes and a rectangular-parallelepiped-shaped package that accommodates other tobacco products.

When a purchaser purchases a tobacco product, (1) the purchaser specifies a brand, and a salesperson selects and removes a tobacco product of the brand from the fixture, or (2) the purchaser voluntarily removes a tobacco product of a desirable brand from the fixture, and purchases the product.

PTL 1 describes a tobacco fixture that is configured to turn on a lamp when the remaining number of tobacco products decreases.

### Citation List

### Patent Literature

PTL 1: International Publication No. 03/039301

### Summary of Invention

### Technical Problem

There are many brands of tobacco products. Therefore, there is a need for performing a display in accordance the brands of tobacco products.

The present invention has been made to address the above problem and provides a tobacco fixture that can perform display in accordance with the brands of tobacco products.

### Solution to Problem

With the present invention, there is provided a tobacco fixture comprising:
a plurality of accommodating areas each of which accommodates a plurality of tobacco products so as to be removable by an operator;
a brand-specifying-information acquiring unit that acquires brand specifying information that specifies a brand of the tobacco products;
an image projection unit that projects an image to perform display in a projection range of the image; and
a projection controller that controls operation of the image projection unit,
wherein the projection controller performs control to cause the image projection unit to perform display that corresponds to the brand specifying information acquired by the brand-specifying-information acquiring unit.

### Advantageous Effects of Invention

With the present invention, it is possible to perform display in accordance with the brands of tobacco products.

### Brief Description of Drawings

[Fig. 1] Fig. 1 is a perspective view of a tobacco fixture according to a first embodiment.
[Fig. 2] Fig. 2 is a side view of the tobacco fixture according to the first embodiment.
[Fig. 3] Fig. 3 is a perspective view of a magazine of the tobacco fixture according to the first embodiment.
[Fig. 4] Fig. 4 is a block diagram of the tobacco fixture according to the first embodiment.
[Fig. 5] Fig. 5 is a partial enlarged front view of the tobacco fixture according to the first embodiment, illustrating a state in normal time.
[Fig. 6] Fig. 6 is a partial enlarged front view of the tobacco fixture according to the first embodiment, illustrating an example of a removal notification display performed on a front wall of the magazine.
[Fig. 7] Fig. 7(a) is a front view illustrating an example of a removal notification display performed on a display screen that is disposed at a place different from the magazine, and Fig. 7(b) is a front view illustrating an example of an incorrect-removal notification display performed on the display screen.
[Fig. 8] Fig. 8(a) is a front view illustrating another example of a removal notification display performed on the front wall of the magazine, and Fig. 8(b) is a front view illustrating another example of a removal notification display performed on the display screen.
[Fig. 9] Fig. 9(a) is a perspective view illustrating a sales counter and the surrounding area of a shop, Fig. 9(b) is a front view illustrating still another example of a removal notification display performed on the front wall of the magazine, and Fig. 9(c) is a front view illustrating still another example of a removal notification display performed on the display screen.
[Fig. 10] Fig. 10 is a front view of a tobacco fixture according to a second embodiment.
[Fig. 11] Fig. 11 is a front view illustrating an example of an incorrect-removal notification display performed on a display screen of the tobacco fixture according to the second embodiment.
[Fig. 12] Fig. 12 is a schematic side sectional view of a tobacco fixture according to a third embodiment.
[Fig. 13] Fig. 13 is a front view illustrating examples of a display performed on a front wall of a magazine of the tobacco fixture according to the third embodiment.
[Fig. 14] Fig. 14 is a front view illustrating an example of a refilling notification display performed on a front wall of a magazine of a tobacco fixture according to a fourth embodiment.
[Fig. 15] Fig. 15(a) is a front view illustrating an example of a refilling notification display performed on a display screen of the tobacco fixture according to the fourth embodiment, and Fig. 15(b) is a front view illustrating an example of an incorrect-refilling notification display performed on the display screen of the tobacco fixture according to the fourth embodiment.
[Fig. 16] Fig. 16 is a front view illustrating other examples of the refilling notification display performed on the front wall of magazine of the tobacco fixture according to the fourth embodiment.
[Fig. 17] Fig. 17(a) is a schematic side sectional view of a tobacco fixture according to a fifth embodiment, Fig. 17(b) is a plan view of an electrode unit that is provided on a shelf of the tobacco fixture according to the fifth embodiment, and Fig. 17(c) is a bottom view of a magazine of the tobacco fixture according to the fifth embodiment.
[Fig. 18] Fig. 18(a) and Fig. 18(b) are schematic plan views illustrating an action of a tobacco fixture according to a sixth embodiment.
[Fig. 19] Fig. 19(a) is a perspective view of a front end portion of a magazine of a tobacco fixture according to a seventh embodiment, and Fig. 19(b) is side view illustrating the front end portion of the magazine of the tobacco fixture according to the seventh embodiment and a part near the front end portion.
[Fig. 20] Fig. 20(a) is a view illustrating an example of a menu screen of an operation tablet of a tobacco fixture according to an eight embodiment, Fig. 20(b) is a front view illustrating an example of a candidate-area guide display performed on a front wall of the tobacco fixture according to the eighth embodiment, and Fig. 20(c) is a view illustrating an example of a screen of the operation tablet when the candidate-area guide display is being performed.
[Fig. 21] Fig. 21(a) and Fig. 21(b) are each a front view illustrating an example of a notification display performed in a tobacco fixture according to a ninth embodiment.
[Fig. 22] Fig. 22 is a front view illustrating an example of a notification display performed on a display screen of a tobacco fixture according to a tenth embodiment.
[Fig. 23] Fig. 23 is a front view of a tobacco fixture according to an eleventh embodiment.
[Fig. 24] Fig. 24(a) and Fig. 24(b) are partial enlarged front views of the tobacco fixture according to the eleventh embodiment.
[Fig. 25] Fig. 25 is a schematic perspective view illustrating an example of a function of a tobacco fixture according to a twelfth embodiment.
[Fig. 26] Fig. 26 is a schematic perspective view illustrating another example of a function of the tobacco fixture according to the twelfth embodiment.
[Fig. 27] Fig. 27 is a view illustrating an example of an image that is displayed on a display screen of a display device of a tobacco fixture.

### Description of Embodiments

Hereafter, embodiments of the present invention will be described with reference to the drawings. In all drawings, similar constituent elements will be denoted by the same numerals, and descriptions will be omitted as appropriate.

### [First Embodiment]

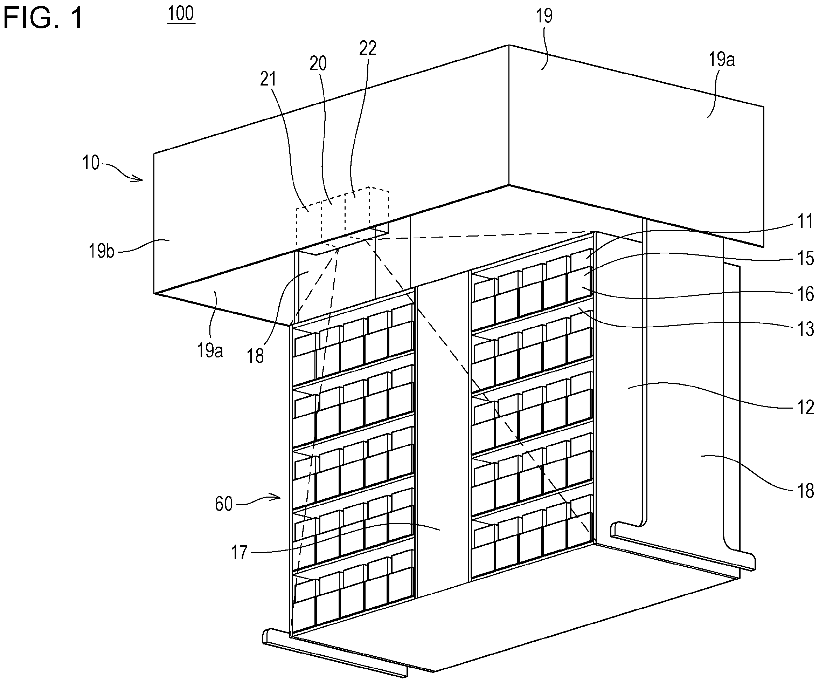

First, referring to Figs. 1 to 9, a first embodiment will be described.

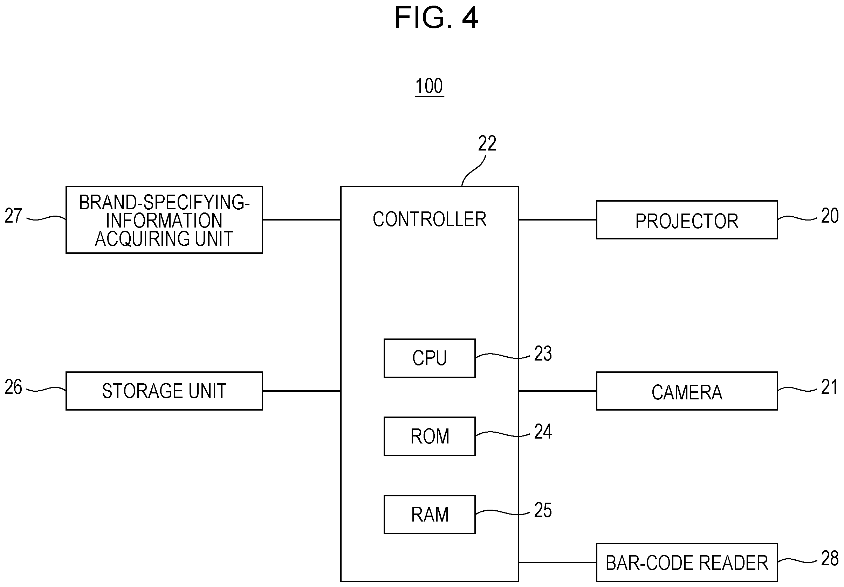

A tobacco fixture 100 according to the present embodiment includes: a plurality of accommodating areas (for example, magazines 15) each of which accommodates a plurality of tobacco products 11 so as to be removable by an operator (for example, a salesperson); a brand-specifying-information acquiring unit 27 (Fig. 4) that acquires brand specifying information that specifies a brand of the tobacco products 11; an image projection unit (a projector 20) that projects an image to perform display in a projection range of the image; and a projection controller (a controller 22) that controls operation of the image projection unit. The projection controller performs control to cause the image projection unit to perform display that corresponds to the brand specifying information acquired by the brand-specifying-information acquiring unit 27.

With the present embodiment, because the projection controller performs control to cause the image projection unit to perform display that corresponds to the brand specifying information acquired by the brand-specifying-information acquiring unit 27, it is possible to perform display in accordance with the brand of the tobacco product 11.

To be more specific, in the present embodiment, the projection controller performs control to cause the image projection unit to perform display in such a manner as to enable identification of, among the plurality of accommodating areas, an accommodating area that corresponds to the brand specifying information acquired by the brand-specifying-information acquiring unit 27.

With the present embodiment, because the projection controller performs control to cause the image projection unit to perform display in such a manner as to enable identification of, among the plurality of accommodating areas (the magazines 15), an accommodating area that corresponds to the brand specifying information acquired by the brand-specifying-information acquiring unit 27, it is possible to enable an operator to easily and quickly recognize the accommodating area that corresponds to the tobacco product 11 of each brand.

Thus, for example, it is possible for the operator to easily and quickly perform removal, refilling, and the like of the tobacco product 11.

Here, the term "tobacco product 11" does not mean each individual cigarette for smoking, but means a rectangular-parallelepiped-shaped package that accommodates a plurality of cigarettes or a rectangular-parallelepiped-shaped package that accommodates other tobacco products other than cigarettes. Examples of the other tobacco products include snuff tobaccos, pipe tobaccos, and related articles such as inhalers that are used for the other tobacco products. To be more specific, examples of the other tobacco products include related articles of electronic cigarettes, which are a type of aerosol inhalers.

The tobacco products 11 are accommodated in the magazines 15 that differ from each other for each brand. The tobacco products 11 of the same brand may be accommodated in a plurality of the magazines 15.

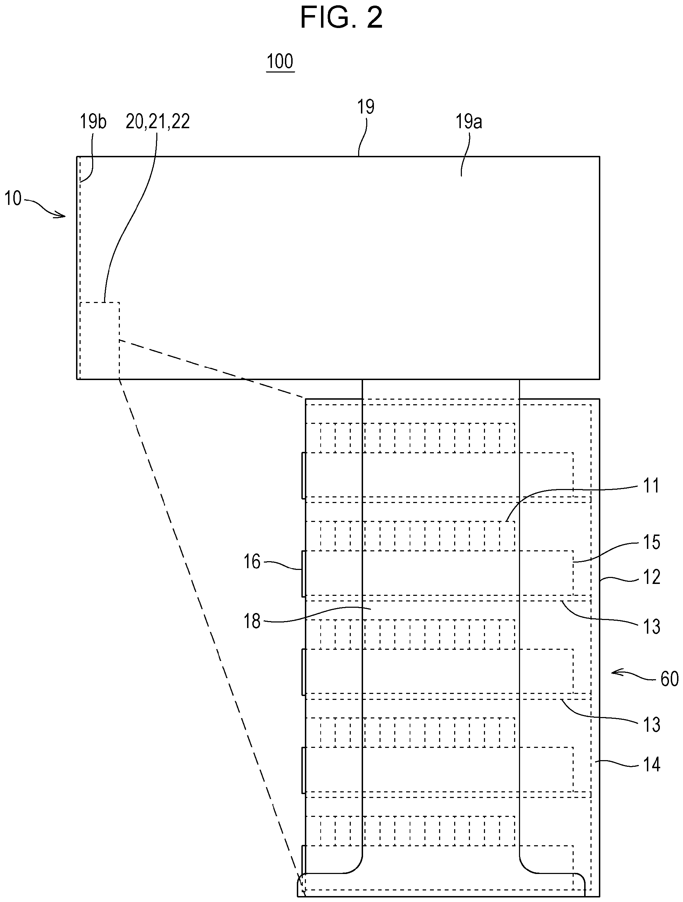

As illustrated in Figs. 1 and 2, in the present embodiment, the tobacco fixture 100 includes a magazine fixture 60 and a projection unit 10.

The magazine fixture 60 includes, for example, a magazine accommodation rack 12 having a plurality of shelves 13, a plurality of magazines 15 mounted on the shelves 13, and a display screen 17 disposed at a central part in the lateral width direction of a front portion of the magazine fixture 60. In the present embodiment, the magazine 15 constitutes an accommodating area. The display screen 17 may be a wall surface of the magazine fixture 60 or may be a curtain.

The number of magazines 15 mounted on the magazine accommodation rack 12 is not particularly limited. In the present embodiment, for example, the magazine accommodation rack 12 includes five tiers of shelves 13 on each of the left and right sides of the display screen 17, and five magazines 15 are mounted on each shelf 13.

The projection unit 10 includes, for example, a pair of left and right support columns 18, and a support portion 19 supported by these support columns 18.

For example, one of the support columns 18 is disposed along a side wall on the left side of the magazine fixture 60, and the other support column 18 is disposed along a side wall on the right side of the magazine fixture 60. The support portion 19 includes, for example, a pair of left and right side walls 19a, and a front wall 19b that connects front ends of the side wall 19a to each other. The left and right side walls 19a are respectively supported by the left and right support columns 18. The front wall 19b is disposed in front of the front surface of the magazine fixture 60, and is disposed above the magazine fixture 60.

The projection unit 10 further includes a projector 20, a camera 21, and a controller 22. The projector 20, the camera 21, and the controller 22 are provided, for example, on the rear side of the front wall 19b of the support portion 19.

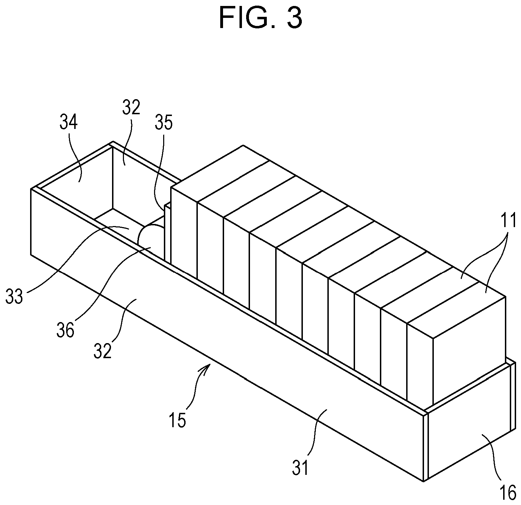

As illustrated in Fig. 3, the magazine 15 includes a mount portion 31 on which the plurality of tobacco products 11 are mounted in an aligned state in which the tobacco products 11 are arranged in the front-back direction, a slider 35 that is movable in the front-back direction along the mount portion 31, and an urging portion 36 that urges the slider 35 forward.

The mount portion 31 includes, for example, a front wall 16, a pair of left and right side walls 32, a bottom plate portion 33, and a back wall 34. The front wall 16 may be fixed to front end portions of the side walls 32 and the bottom plate portion 33, or may be held by front end portions of the pair of side walls 32 in a state in which the front wall 16 can incline forward.

The slider 35 urges the tobacco products 11, which are mounted on the mount portion 31, forward. As the remaining number of the tobacco products 1 1 on the mount portion 31 decreases, the slider 35 moves forward.

The urging portion 36 is mounted on the slider 35. The urging portion 36 may be, for example, a spirally wound plate spring or may be a wire reel.

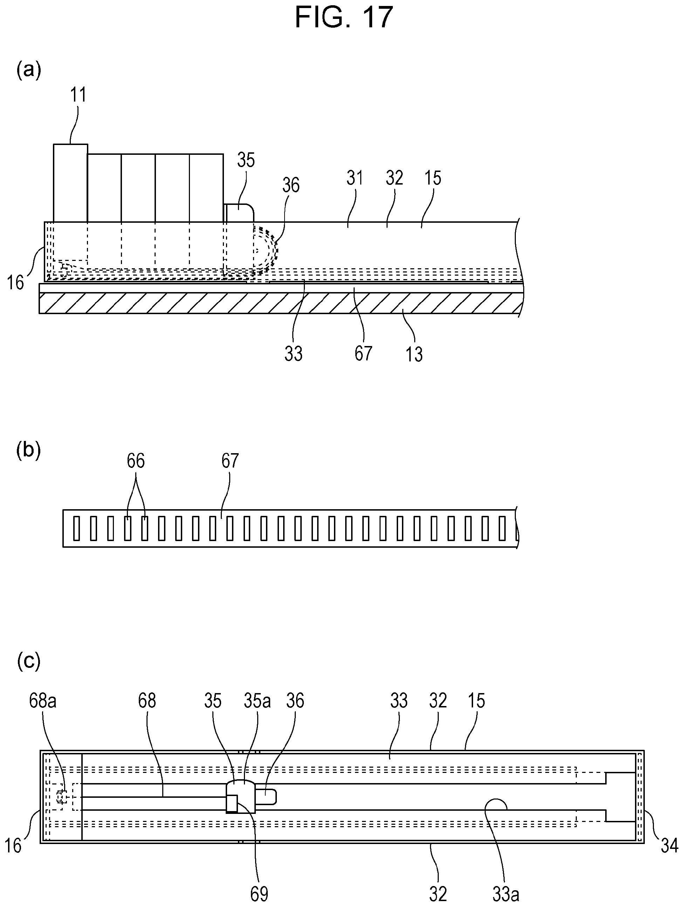

Fig. 17(c), which is a view of another embodiment described below, illustrates an example in which the urging portion 36 is a wire reel. The wire reel includes a case mounted on the slider 35, a plate spring that is spirally wound and accommodated in the case, a wire 68 accommodated in the case so that the wire 68 can be drawn into and drawn out of the case, and a reel around which the wire 68 is wound. A leading end 68a of the wire 68 is fixed to a front end portion of the mount portion 31. When the wire 68 is wound around the reel by being urged by the plate spring, the wire 68 is drawn into the case, and the slider 35 moves forward. Conversely, when the slider 35 is moved backward, the wire 68 is drawn out from the case against an urging force generated by the plate spring.

As illustrated in Fig. 4, the tobacco fixture 100 includes, for example, a storage unit 26 that is non-volatile memory and a bar-code reader 28, in addition to the projector 20, the camera 21, the controller 22, and the brand-specifying-information acquiring unit 27, which are described above.

The controller 22 includes a ROM 24 that stores a control program, a CPU 23 that performs a control operation in accordance with the control program, and a RAM 25 that functions as a work area of the CPU 23 and the like.

The controller 22 performs control of the operation of the projector 20 and the camera 21, reading-out of information stored in the storage unit 26, writing of (processing for storing) information in the storage unit 26, and the like.

To the controller 22, an image captured by the camera 21 and bar-code information read by the bar-code reader 28 are input, in addition to brand specifying information acquired by the brand-specifying-information acquiring unit 27 and the like. The bar code is article identification information such as JAN (Japanese Article Number).

The brand-specifying-information acquiring unit 27 is, for example, an operation tablet that is operated by a salesperson (operator) of a shop in which the tobacco fixture 100 is set. For example, a salesperson can specify a brand to be removed from the tobacco fixture 100 by inputting a removal request to a touch-panel operation screen of the operation tablet by selecting removal of a tobacco product and by further performing a selection operation of selecting from a brand list that is displayed. Alternatively, a salesperson may be enabled to specify a brand by performing voice input of a brand name to a microphone of the operation tablet.

Thus, an operator is a salesperson of a shop, and the brand-specifying-information acquiring unit 27 acquires brand specifying information that is input by the salesperson (for example, input by performing a selection operation or voice input).

In the present embodiment, the projector 20 projects an image to a range including the front walls 16 of the plurality of magazines 15 and the display screen 17 to perform display in the range. That is, the image projected by the projector 20 is displayed on the front walls 16 of the plurality of magazines 15 and the display screen 17. The number of light sources of the projector 20 is not particularly limited and may be one, but preferably the number is plural.

The controller 22 preforms processing for generating an image to be projected by the projector 20 and processing for projecting the image by using the projector 20.

In the storage unit 26, information indicating in which magazine 15, among the plurality of magazines 15, the tobacco product 11 of each brand is accommodated is stored (registered).

To be more specific, in the storage unit 26, for example, brand information such as the brand name, the tar value, the nicotine value, the price, and the like of each brand of the tobacco product 11 are stored; and in correspondence with the brand information, magazine-position information indicating in which magazine 15 the tobacco product 11 is accommodated is stored.

Moreover, positional information of the front wall 16 of each magazine 15 with reference of the position where the projector 20 is set is stored in the storage unit 26.

The controller 22 can control an image displayed on each front wall 16 based on the positional information of each front wall 16.

The camera 21 continuously captures images of the front walls 16 of the plurality of magazines 15 and outputs the captured images to the controller 22.

The controller 22 determines, by image recognition using the captured images input from the camera 21, whether or not removal of the tobacco product 11 from the magazine 15 performed by an operator is removal of the tobacco product 11 corresponding to a removal request. In other words, the controller 22 and the camera 21 can detect normal removal, which is removal of the tobacco product 11 from the magazine 15 corresponding to a removal request, or incorrect removal, which is removal of the tobacco product 11 from the magazine 15 different from the removal request.

As an example, the controller 22 detects normal removal or incorrect removal by performing image processing on the image of the tobacco product 11 removed by an operator and thereby determining the type of the removed tobacco product 11 and the brand specification information.

Alternatively, the controller 22 may detect normal removal or incorrect removal by determining from which magazine 15 the operator has removed the tobacco product 11 by image processing (on the motion of the operator's hand or the like) and by further determining whether or not magazine -position information of the magazine 15 from which the tobacco product 11 has been removed corresponds to the removal request.

For example, when refilling the magazine 15 with tobacco products 11, a salesperson performs processing for causing the bar-code reader 28 to read a bar code attached to the tobacco products 11 or the carton of the tobacco products 11, and then the controller 22 performs processing for causing, for example, causing the front wall 16 of a corresponding magazine 15 to glow red.

If a plurality of brands of tobacco products 11 are to be refilled simultaneously, for example, after an operator has continuously (successively) performed processing for causing the bar-code reader 28 to read the bar codes of the brands, every time refilling of a magazine 15 with tobacco products 11 is complete, for example, processing for successively (for example, in the order in which reading of the bar code is performed) causing the front wall 16 of a magazine 15 corresponding to the next brand to glow red may be performed.

The tobacco fixture 100 may include an incorrect-refilling detector that detects whether or not refilling of the magazine 15 with the tobacco product 11 is correct. As in determination of incorrect removal, the controller 22 can detect incorrect refilling by determination using image recognition or the like. When incorrect refilling is detected, the controller 22 causes the projector 20 to perform an incorrect-refilling notification display indicating that the refilling is incorrect.

That is, the tobacco fixture 100 may include an incorrect-refilling detector that detects incorrect refilling of an accommodating area (for example, the magazine 15) that differs from a refilling notification display with the tobacco product 11, and, when incorrect refilling occurs, the projection controller (the controller 22) may cause the image projection unit (the projector 20) to perform an incorrect-refilling notification display indicating that the refilling is incorrect.

Moreover, the incorrect-refilling detector includes, for example, the camera 21 that captures an image of removal of the tobacco products 11 from a plurality of accommodating areas, and an incorrect-removal determination unit (the controller 22) that determines whether or not incorrect refilling has been performed by image recognition using the image captured by the camera 21.

The controller 22 may be capable of distinguishing, by image recognition using an image captured by the camera 21, whether an operation performed by an operator is removal of the tobacco product 11 from the magazine 15 or refilling of the magazine 15 with the tobacco product 11.

When removing the tobacco product 11 from the magazine 15, the tobacco product 11 is removed from the magazine 15 in a state in which the magazine 15 is placed on the shelf 13 of the magazine accommodation rack 12. In contrast, when refilling the magazine 15 with the tobacco product 11, the magazine 15 is temporarily drawn out from the magazine accommodation rack 12. Therefore, for example, the controller 22 distinguishes whether the operation is removal or refilling by determining by image recognition whether or not the drawing-out motion has been performed.

Preferably, by changing the color of light projected to the front wall 16 of the magazine 15 and the display screen 17 in accordance with the type of a notification display (for example, in accordance with whether the display is a removal notification display or a refilling notification display), an operator can easily identify the type of the notification display.

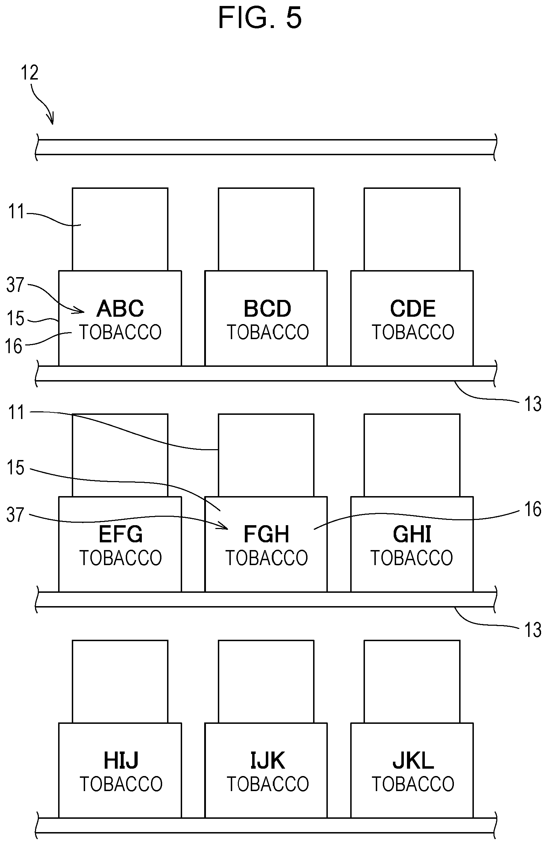

Fig. 5 illustrates an example of an image (a normal display 37) displayed by the projector 20 on the front wall 16 of each magazine 15 in normal time when a removal request for removing a tobacco product or the like is not occurring.

As illustrated in Fig. 5, the brand name and the like of the tobacco product 11 accommodated in each magazine 15 are displayed as the normal display 37 on the front wall 16 of each magazine 15. Information displayed as the normal display 37 may include the price, the tar value, the nicotine value, and the like of each tobacco product 11, in addition to the brand name.

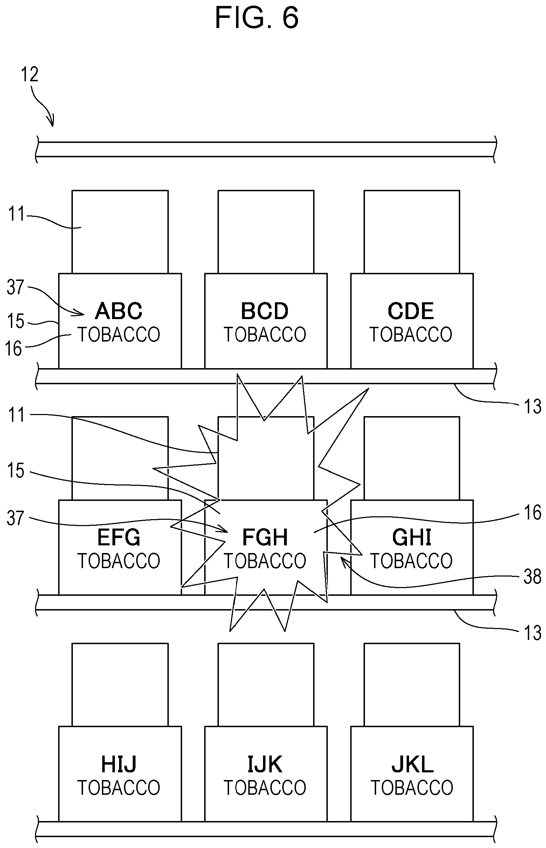

Fig. 6 illustrates an example of an image (a removal notification display 38) displayed by the projector 20 on the front wall 16 of the magazine 15 in which the tobacco product 11 corresponding to the removal request is accommodated, in a state in which a removal request for removing the tobacco product is occurring.

The removal notification display 38 is a display that is more noticeable than the normal display 37. Forexample, in a case where the normal display 37 is a white display or the like, the removal notification display 38 may be a red display or the like. The removal notification display 38 may be a display of blinking of red light or the like.

Accordingly, the magazine 15 having the front wall 16 on which the removal notification display 38 is performed becomes noticeable compared with the surroundings.

That is, the projection controller (the controller 22) causes the image projection unit (the projector 20) to perform display that causes the accommodating area (the magazine 15) that corresponds to the brand specifying information to be noticeable compared with the surroundings.

Thus, an operator can easily and quickly recognize the position of the accommodating area (the magazine 15) from which the tobacco product 11 is to be removed, and therefore the operator can quickly remove the tobacco product 11 from the accommodating area.

Conversely to the above, it is possible to perform display that causes an accommodating area that corresponds to the brand specifying information to be noticeable compared with the surroundings also by irradiating accommodating areas (for example, the front walls 16) around the accommodating area that corresponds to the brand specifying information with light and not irradiating the accommodating area that corresponds to the brand specifying information with light.

Thus, the brand-specifying-information acquiring unit 27 acquires (via input by a salesperson in the present embodiment) a removal request for removing a tobacco product and brand specifying information corresponding to the removal request; and the projection controller (the controller 22) causes the image projection unit (the projector 20) to perform the removal notification display 38 that prompts removal of the tobacco product 11 from the accommodating area (the magazine 15).

Thus, in normal time, the projection controller (the controller 22) causes the normal display 37 that corresponds to the tobacco product 11 accommodated in the accommodating area (the magazine 15) to be performed on the accommodating area, and when the brand-specifying-information acquiring unit 27 acquires brand specifying information, the projection controller causes a specific notification display (for example, the removal notification display 38) in a manner different from the normal display 37 to be performed on an accommodating area that corresponds to the brand specifying information.

To be more specific, when the brand-specifying-information acquiring unit 27 acquires brand specifying information, the projection controller (the controller 22) causes both of the normal display 37 and the specific notification display (the removal notification display 38) to be performed on the accommodating area (the magazine 15) that corresponds to the brand specifying information.

Thus, an operator can remove the tobacco product 11 from the accommodating area (the magazine 15) indicated by the removal notification display 38, while checking the contents of the normal display 37.

In the present invention, a specific notification display is not limited to the removal notification display 38 and may be a refilling notification display that prompts refilling of the magazine 15 with the tobacco products 11 as described below.

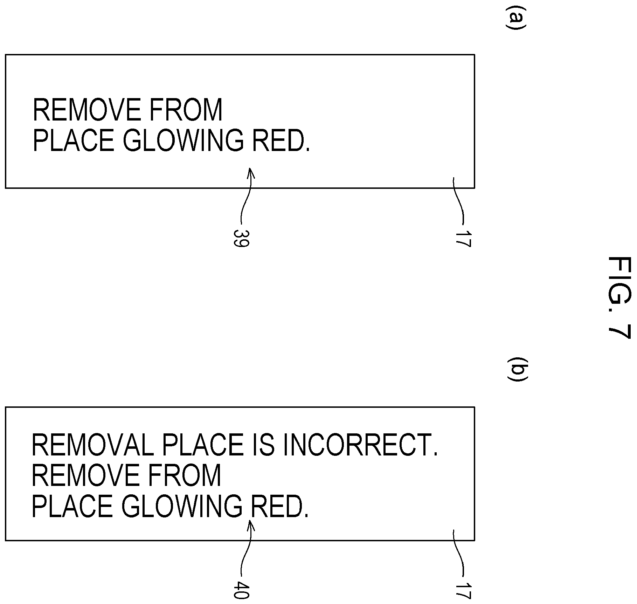

As illustrated in Fig. 7(a), in the present embodiment, the projector 20 also causes a removal notification display 39 that prompts removal of the tobacco product 11 from the magazine 15 to be displayed on the display screen 17 disposed at the center of the magazine fixture 60. The removal notification display 39 is, for example, a display such as "Remove from place glowing red."

When performing the removal notification display 38 and the removal notification display 39, a removal notification by voice may be performed from a speaker (not shown). For example, a voice notification such as "Remove from place glowing red." may be performed.

When the camera 21 and the controller 22 detect normal removal, the controller 22 performs, for example, processing that finishes the removal notification display 38 and the removal notification display 39.

Preferably, the controller 22 causes the storage unit 26 to store a sales record for each brand every time normal removal is detected.

Moreover, when normal removal is detected in a case where a brand in a state of waiting for a removal notification display exists, it is easy to quickly proceed to a state in which a removal notification display (the removal notification display 38, the removal notification display 39) for the next brand is to be performed.

On the other hand, when the camera 21 and the controller 22 detect incorrect removal, the controller 22 causes the projector 20 to display the incorrect-removal notification display 40 indicating that the removal is incorrect on the display screen 17 (Fig. 7(b)). The incorrect-removal notification display 40 is, for example, a display such as "Removal place is incorrect.

### Remove from place glowing red."

Thus, the tobacco fixture 100 includes an incorrect-removal detector (which includes, for example, the camera 21 and the controller 22) that detects incorrect removal that is removal of the tobacco product 11 from the accommodating area (the magazine 15) that differs from the removal request. When incorrect removal occurs, the projection controller (the controller 22) causes the image projection unit (the projector 20) to perform an incorrect-removal notification display 40 indicating that the removal is incorrect.

Thus, when an operator performs incorrect removal, the operator can quickly recognize that the removal is incorrect, and can remove the tobacco product 11 from the correct accommodating area (the magazine 15).

To be more specific, the incorrect-removal detector includes the camera 21 that captures an image of removal of the tobacco product 11 from the plurality of accommodating areas (the magazines 15), and an incorrect-removal determination unit (the controller 22) that determines whether or not incorrect removal has been performed by image recognition using the image captured by the camera 21.

Also when notifying incorrect removal, a notification by voice may be performed from a speaker (not shown).

In the present invention, the tobacco fixture 100 is not limited to a configuration that automatically detects normal removal and incorrect removal. For example, a salesperson may operate a removal finish button, which is provided in correspondence with each magazine 15, every time the salesperson removes the tobacco product 11 from the tobacco fixture 100, and then the controller 22 may finish the removal notification display 38 and the removal notification display 39 (further, a voice notification) and may cause the storage unit 26 to store a sales record for each brand.

The removal notification display 38 may provide not only a notification of the position of the magazine 15 from which the tobacco products 11 are to be removed but also a display notification of the number of the tobacco products 11 to be removed from the magazine 15 (display of number-specifying information). In this case, an operator inputs (via an input operation or voice input), for example, the number of the tobacco products 11 that a purchaser wants to purchase to the brand-specifying-information acquiring unit 27.

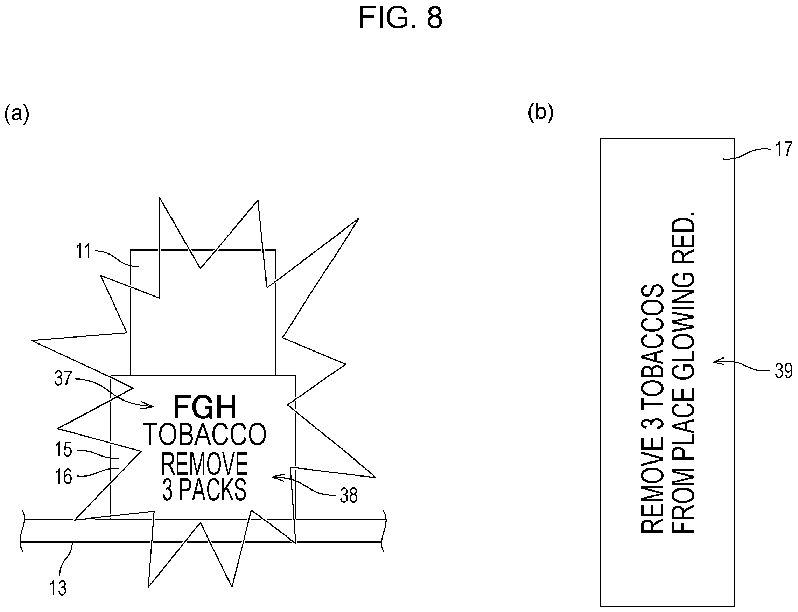

In this case, for example, as illustrated in Fig. 8(a), a display notification of "Remove 3 packs" may be performed as the removal notification display 38 performed on the front wall 16 of the magazine 15, in addition to the red light emitting display described above.

As illustrated in Fig. 8(b), a display notification such as "Remove 3 packs from place glowing red." may be performed as the removal notification display 39 performed on the display screen 17.

Thus, the projection controller (the controller 22) causes, for example, the image projection unit (the projector 20) to display number-specifying information indicating the number of tobacco products 11 that correspond to a removal request and that are to be removed from the accommodating area (the magazine 15).

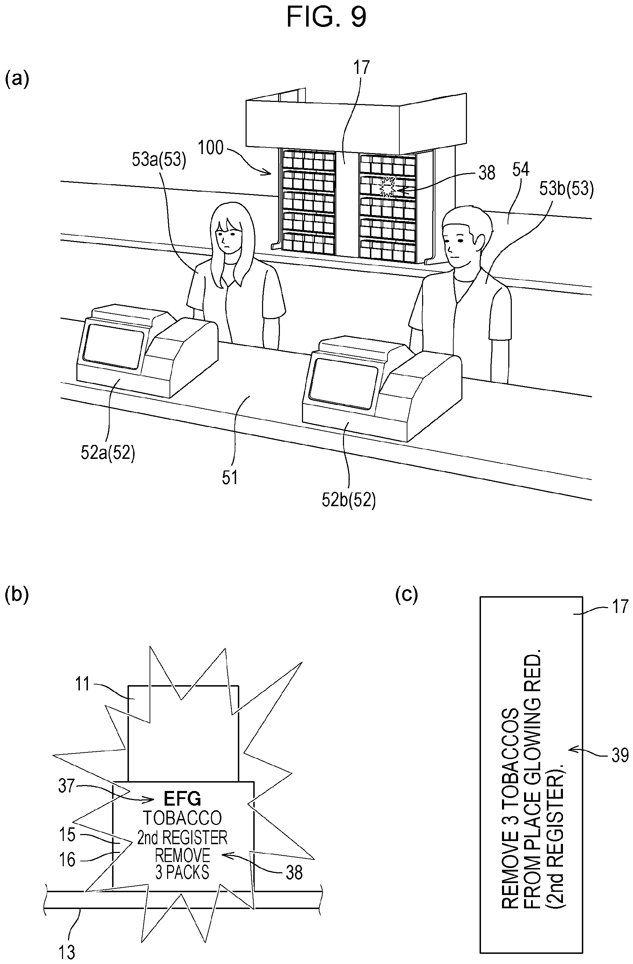

Here, in a shop such as a convenience store, for example, as illustrated in Fig. 9(a), typically, a plurality of sales terminals (for example, electronic cash registers 52) are set on a sales counter 51, and a plurality of salespersons 53 can perform sales processing in parallel. A workspace for the salespersons 53 is provided at the back of the sales counter 51, and further, a fixture setting counter 54 on which the tobacco fixture 100 is set is provided at the back of the workspace.

In Fig. 9(a), a salesperson 53 on the left side (a salesperson 53a) takes charge of sales processing using an electronic cash register 52 on the left side (an electronic cash register 52a) (hereafter, a first register). A salesperson 53 on the right side (a salesperson 53b) takes charge of sales processing using an electronic cash register 52 on the right side (an electronic cash register 52b) (hereafter, a second register).

Although illustration is omitted, brand-specifying-information acquiring units 27 are respectively provided in correspondence with the electronic cash registers 52. The salesperson 53a operates a brand-specifying-information acquiring unit 27 corresponding to the electronic cash register 52a, and the salesperson 53b operates a brand-specifying-information acquiring unit 27 corresponding to the electronic cash register 52b.

In such a case, preferably, the removal notification display 38 provides not only a notification of the position of the magazine 15 from which the tobacco products 11 are to be removed and the number of the tobacco products 11 but also a display notification of information indicating which electronic cash register 52, among the plurality of electronic cash registers 52, is to be used to sell the tobacco products 11 corresponding to the removal request (hereafter, sales-terminal specifying information).

That is, for example, as illustrated in Fig. 9(b), a display notification of "2nd Register Remove 3 packs" may be performed as the removal notification display 38 performed on the front wall 16 of the magazine 15, in addition to the red-light emitting display described above.

As illustrated in Fig. 9(c), a display notification such as "Remove 3 packs from place glowing red. (2nd Register)" may be performed as the removal notification display 39 performed on the display screen 17.

Thus, the salesperson 53b in charge of the second register can easily recognize the magazine 15 where the removal notification display 38 is being performed and can remove the tobacco product 11 from the magazine 15.

Thus, the projection controller (the controller 22) causes, for example, the image projection unit (the projector 20) to display sales-terminal specifying information indicating which sales terminal, among the plurality of sales terminals (the electronic cash registers 52) that are set in the shop, is to be used to sell the tobacco product 11 corresponding to the removal request.

In order to make it easier to understand which electronic cash register 52 is to be used to sell the tobacco product 11 corresponding to the removal request, it is also preferable that the color (projection color) of light projected to the front wall 16 by the projector 20 be differentiated for each electronic cash register 52. Moreover, it is also preferable that a sound that is output from a speaker (not shown) be differentiated for each electronic cash register 52.

When a removal request for the tobacco products 11 to be sold at a plurality of electronic cash registers 52 occurs, preferably, a removal notification display of the tobacco product 11 to be sold by each electronic cash register 52 is performed successively. However, by differentiating the projection color or the like for each electronic cash register 52 as described above, even when removal notification displays or the tobacco products 11 to be sold at the plurality of electronic cash registers 52 are performed simultaneously (in parallel), it is possible for an operator to easily distinguish between these removal notification displays.

When the accommodation place for the tobacco product 11 of each brand in the magazine fixture 60 is changed, it is easy to adapt to the change by changing an image to be projected by the projector 20 in accordance with the change.

The same applies to a case where the arrangement of the magazines 15 in the magazine fixture 60 (the arrangement of the accommodating areas) is changed. That is, also when the interval of the arrangement of the magazines 15 (the interval of the arrangement the accommodating areas) or the number of the magazines 15 (the number of the accommodating areas) is changed, it is easy to adapt to the change by changing an image to be projected by the projector 20.

Here, typically, when the tobacco fixture 100 is operating, the projector 20 is projecting an image at all time to a range including the front walls 16 of the plurality of magazines 15 and the display screen 17. When the brand-specifying-information acquiring unit 27 acquires brand specifying information (when a removal request is received or when the bar-code reader 28 reads a bar code attached to the tobacco product 11 or the carton of the tobacco product 11), the projector 20 changes an image displayed on the front wall 16 of the magazine 15 that accommodates the tobacco product 11 corresponding to the brand specifying information.

However, the present invention is not limited to this example. When the brand-specifying-information acquiring unit 27 acquires brand specifying information, the projector 20 may start displaying an image on the front wall 16 of the magazine 15 in which the tobacco product 11 corresponding to the brand specifying information is accommodated (including simple projection of light to the front wall 16).

With the first embodiment described above, the projection controller (the controller 22) performs control to cause the image projection unit (the projector 20) to perform display in such a manner as to enable identification of, among the plurality of accommodating areas (the magazines 15), an accommodating area that corresponds to the brand specifying information acquired by the brand-specifying-information acquiring unit 27.

Thus, it is possible to enable an operator to easily and quickly recognize the accommodating area that corresponds to the tobacco product 11 of each brand. Thus, a workload on an operator (typically, a salesperson) can be reduced.

In the example described in the first embodiment, when incorrect removal is detected, the occurrence of incorrect removal is notified via projection of an image by the projector 20 or voice output from a speaker (not shown). However, the present invention is not limited to this example. For example, the occurrence of incorrect removal may be notified to an operator by causing a vibrator (not shown) to vibrate, generating a smell, or causing a member to mechanically pop up.

In the first embodiment, whether or not removal of the tobacco product 11 from the magazine 15 is correct may be detected by using an identification mark attached to the magazine 15.

For example, an identification mark (for example, a mark indicating a QR code (registered trademark)) is attached to an outer surface of a front end portion of the side wall 32 of the mount portion 31 of each magazine 15, and the camera 21 captures an image of the identification mark. The storage unit 26 stores correspondence (table) between each identification mark and each brand specifying information. The controller 22 distinguishes by image recognition the type of the identification mark of the magazine 15 from which an operator has removed the tobacco product 11, and further, refers to the table in the storage unit 26 and determines whether the identification mark corresponds to the brand specifying information corresponding to a removal request. Thus, the controller 22 detects normal removal or incorrect removal.

For example, by removing the tobacco product 11 from the magazine 15 in a state in which the magazine 15 is drawn out forward from the magazine accommodation rack 12, it is possible for the camera 21 to appropriately capture an image of the identification mark of the magazine 15 from which the tobacco product 11 has been removed.

Alternatively, in a case where the front wall 16 is a flap portion that inclines forward when removing the tobacco product 11 from the magazine 15, it is also preferable that the identification mark be attached to a side surface of the front wall 16. By doing so, it is possible for the camera 21 to appropriately capture an image of the identification mark (on the front wall 16) of the magazine 15 from which the tobacco product 11 has been removed.

Also when detecting whether or not refilling of the magazine 15 with the tobacco product 11 is correct, the controller 22 can detect incorrect refilling via determination using the identification mark described above.

### [Second Embodiment]

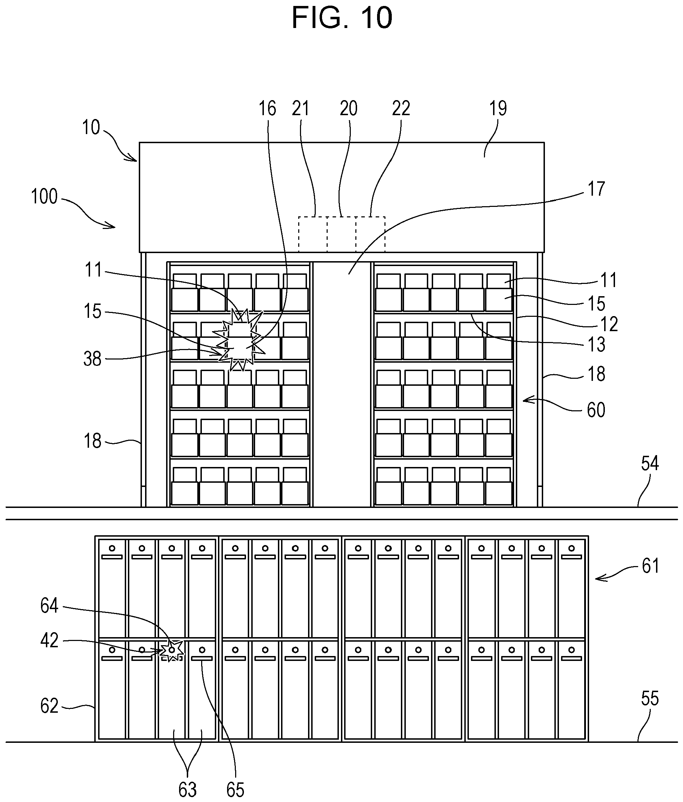

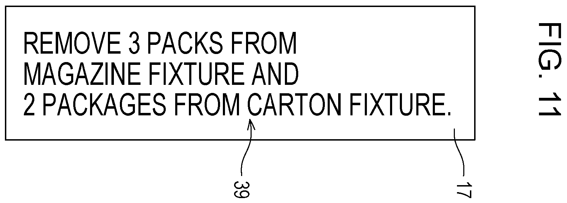

Next, referring to Figs. 10 and 11, a second embodiment will be described.

A tobacco fixture 100 according to the present embodiment differs from the tobacco fixture 100 according to the first embodiment in the following respects, and is similar to the tobacco fixture 100 according to the first embodiment in the other respects.

As illustrated in Fig. 10, the tobacco fixture 100 according to the present embodiment includes, in addition to the magazine fixture 60 and the projection unit 10 that are set on the fixture setting counter 54, a carton fixture 61 that is set on a floor surface 55 below the fixture setting counter 54.

In some cases, the tobacco products 11 are distributed in the form of a so-called carton in which the plurality of tobacco products 11 of the same brand are packed together. In general, in one carton, ten tobacco products 11 are packed together. A carton is also called a parcel.

The carton fixture 61 is a cabinet for storing cartons and can accommodate cartons respectively corresponding to the tobacco products 11 of a plurality of brands.

The carton fixture 61 includes, for example, a frame 62 and a plurality of drawer shelves 63 that are held by the frame 62 so as to be capable of being drawn out forward from the frame 62.

In a front wall of the drawer shelf 63, a handle 65 that an operator hooks a finger when pulling out the drawer shelf 63 is provided.

Moreover, on the front wall of the drawer shelf 63, a drawer-rack notification light emitter 64 is provided. The drawer-rack notification light emitter 64 includes a light-emitting member such as an LED. The controller 22 controls the operation of the drawer-rack notification light emitter 64.

For example, different brands are respectively accommodated in different drawer shelves 63.

In the storage unit 26, information indicating in which drawer shelf 63, among the plurality of drawer shelves 63, a carton of each brand is accommodated is stored.

In the present embodiment, if the stock in the magazine fixture 60 is not sufficient for the number of the tobacco products 11 that a purchaser wants to purchase, a notification display that prompts a salesperson to remove the tobacco products 11 in the magazine fixture 60 and the tobacco products 11 in the carton fixture 61.

For example, when a purchaser wants to purchase five tobacco products 11 of a certain brand and if the stock of the tobacco products 11 of the brand in the magazine fixture 60 is three, as illustrated in Fig. 11, the removal notification display 39 such as "Remove 3 packs from magazine fixture and 2 packs from carton fixture." is performed on the display screen 17.

At this time, as illustrated in Fig. 10, the controller 22 causes a removal notification display 42 to be performed by turning on the drawer-rack notification light emitter 64 of a drawer shelf 63 that accommodates a carton, while causing the removal notification display 38 to be performed on the front wall 16 of the magazine 15 that accommodates the tobacco product 11 corresponding to a removal request.

Thus, a salesperson can easily recognize the magazine 15 from which the tobacco product 11 is to be removed and can easily recognize the drawer shelf 63 from which the carton is to be removed. After removing the carton from the drawer shelf 63, the salesperson unpacks the carton to remove from the carton, for example, two tobacco products 11, and sells three tobacco products 11 removed from the magazine fixture 60 and the two tobacco products 11 removed from the carton.

When a purchaser wants to purchase ten or more tobacco products 11 of a certain brand, a removal notification display such as "Remove tobaccos from carton fixture." is performed on the display screen 17.

In the present embodiment, the carton fixture 61 need not include the drawer-rack notification light emitter 64. For example, in the same way as performing a display notification on the front wall 16 of the magazine 15 or the display screen 17 in the first embodiment, a display notification may be performed by projecting an image from the projector 20 to the front wall of the drawer shelf 63 to prompt a salesperson to remove a carton from a corresponding drawer shelf 63.

### [Third Embodiment]

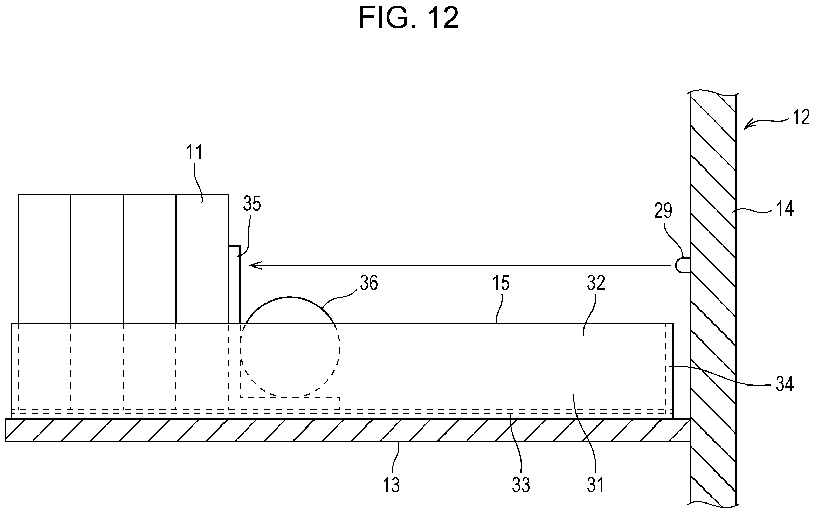

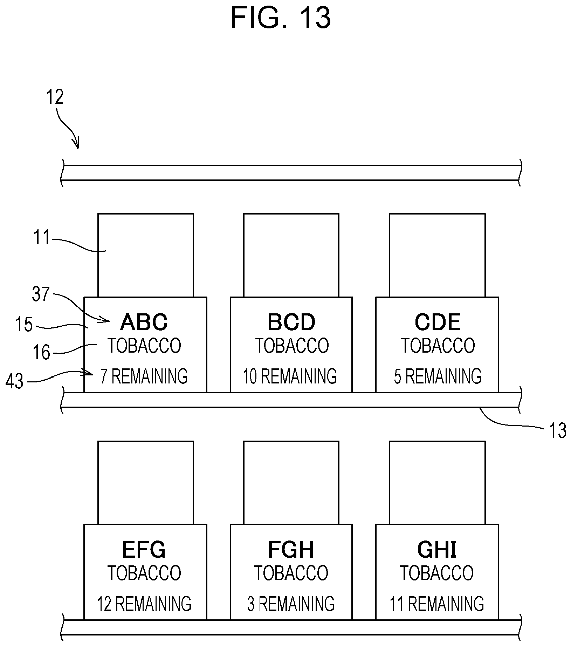

Next, referring to Figs. 12 and 13, a third embodiment will be described.

A tobacco fixture 100 according to the present embodiment differs from the tobacco fixture 100 according to the first embodiment in the following respects, and is similar to the tobacco fixture 100 according to the first embodiment in the other respects.

In the present embodiment, a distance sensor 29 is provided for each magazine 15 on the front side of a back wall 14 of the magazine accommodation rack 12 of the magazine fixture 60.

The distance sensor 29 is, for example, an optical sensor and includes a light emitter that emits light forward and a light receiver that receives reflection light of the light emitted from the light emitter. The measuring method of the distance sensor 29 may be a trigonometric distance-measuring method or a method that converts the time difference between emission of light and reception of light into a distance. The distance sensor 29 is not limited to an optical sensor and may be an ultrasonic sensor.

The distance sensor 29 detects the distance between the distance sensor 29 and the slider 35 or the distance between the distance sensor 29 and the tobacco product 11 at the tail end. That is, the distance sensor 29 detects, from behind, the position of a portion (the tobacco product 11 at the tail end or the slider 35) that moves forward as the number of the tobacco products 11 accommodated in the magazine 15 decreases.

In the present embodiment, a result of detection by the distance sensor 29 that is provided in correspondence with each magazine 15 is input to the controller 22. Based on the result of detection by each distance sensor 29, the controller 22 monitors whether or not the tobacco product 11 has been removed from each magazine 15.

Accordingly, the controller 22 can detect incorrect removal, which is removal of the tobacco product 11 from the magazine 15 that differs from the removal request.

Therefore, in the present embodiment, the tobacco fixture 100 need not include the camera 21.

Thus, in the present embodiment, each of the plurality of accommodating areas is the magazine 15; and the magazine 15 includes the mount portion 31 on which the plurality of tobacco products 11 are mounted in an aligned state in which the tobacco products 11 are arranged in the front-back direction, the slider 35 that is movable in the front-back direction along the mount portion 31, and the urging portion 36 that urges the slider 35 forward. The incorrect-removal detector includes the distance sensor 29 that is provided behind the slider 35 and that detects the distance between the distance sensor 29 and the slider 35 or the distance between the distance sensor 29 and one of the tobacco products 11 at the tail end.

In the present embodiment, the controller 22 manages the remaining number of the tobacco products 11 in each magazine 15 based on a result of detection by each distance sensor 29.

Then, as illustrated in Fig. 13, a remaining-number display 43, which is a display indicating the remaining number of the tobacco products 11 in each magazine 15, is performed on the front wall 16 of each magazine 15 at all times or upon request by a salesperson. That is, in accordance with the result of management by the remaining number, the controller 22 causes the projector 20 to perform the remaining-number display 43, which is a display indicating the remaining number of the tobacco products 11 in each magazine 15.

Thus, a salesperson can easily recognize the remaining number of the tobacco products 11 in each magazine 15.

Here, the thickness of the tobacco product 11 in the front-back direction (hereafter, simply referred to as the "thickness") in a state in which the tobacco product 11 is accommodated in the magazine 15 differs in accordance with the brand of the tobacco product 11.

In the storage unit 26, information indicating the brand of the tobacco product 11 accommodated in each magazine 15 and information indicating the thickness of the tobacco product 11 are stored.

Based on the thickness for each brand and the result of detection by the distance sensor 29, the controller 22 calculates the remaining number of the tobacco products 11 in each magazine 15.

In a case where the tobacco products 11 of the same brand are accommodated in a plurality of magazines 15, the display of the remaining number may be performed on the front wall 16 of one of the magazines 15 among the magazines 15 that accommodate the tobacco products 11 of the brand.

In the present embodiment, the controller 22 may cause the storage unit 26 to store a sales record for each brand based on the result of detection by the distance sensor 29.

The controller 22 may monitor whether the number of the tobacco products 11 removed from the tobacco fixture 100 is excessive or deficient based on the result of detection by the distance sensor 29. In this case, if the number of the tobacco products 11 removed from the tobacco fixture 100 is greater than or less than the number to be sold, under the control of the controller 22, an alert may be raised via a display notification performed by the projector 20 or a voice notification.

### [Fourth Embodiment]

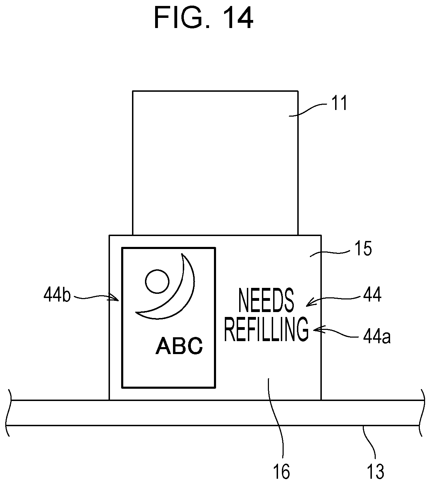

Next, referring to Figs. 14 to 16, a fourth embodiment will be described.

A tobacco fixture 100 according to the present embodiment has a function of performing a refilling notification display that prompts refilling of the magazine 15 with the tobacco products 11, in addition to the function of the tobacco fixture 100 according to the third embodiment 100.

In the present embodiment, in the storage unit 26, a remaining number at which refilling of the magazine 15 becomes necessary (refilling threshold) is set for each brand of the tobacco product 11. When the number of the tobacco products 11 of a certain brand in the magazine 15 becomes less than or equal to the refilling threshold, the controller 22 controls the projector 20 to perform on the front wall 16 or the display screen 17 a refilling notification display that prompts refilling of the magazine 15 with the tobacco products 11.

For example, in a case where the brand of the tobacco products 11 that needs refilling is "ABC tobacco", as illustrated in Fig. 14, a display including character information 44a of "Needs refilling" and image information 44b of the image of the ABC tobacco is performed as a refilling notification display 44 performed on the front wall 16. Therefore, a salesperson can easily and surely recognize the tobacco product 11 that needs refilling, and can refill a corresponding magazine 15 with the tobacco product 11.

Thus, the tobacco fixture 100 includes a remaining-number managing unit (the controller 22, the distance sensor 29) that manages the remaining number of the tobacco products 11 in each of the plurality of accommodating areas (the magazines 15); and the projection controller (the controller 22) causes the image projection unit (the projector 20) to perform the refilling notification display 44 that prompts refilling of the accommodating area with the tobacco products 11 in accordance with the result of management by the remaining-number managing unit.

The remaining-number managing unit includes the distance sensor 29 that is provided behind the slider 35 and that detects the distance between the distance sensor 29 and the slider 35 or the distance between the distance sensor 29 and the tobacco product 11 at the tail end.

In the same way as causing the front wall 16 of the magazine 15 that accommodates the tobacco product 11 to glow red in the first embodiment, in the present embodiment, the front wall 16 of the magazine 15 corresponding to the tobacco product 11 that needs refilling may be caused to glow another color (for example, yellow).

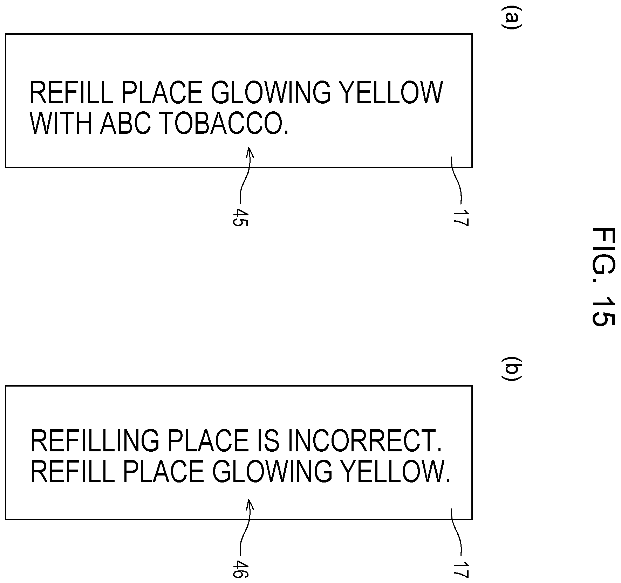

For example, as illustrated in Fig. 15(a), a display such as "Refill place glowing yellow with ABC tobacco." is performed as a refilling notification display 45 performed on the display screen 17.

If a removal request occurs while the refilling notification display 44 is being performed, for example, the refilling notification display 44 may be temporarily stopped and the removal notification display 38 and the removal notification display 39 may be preferentially performed as interrupt processing. In this case, for example, the refilling notification display 44 is restarted after the normal removal is detected.

However, the present invention in not limited to this example. The tobacco fixture 100 may be capable of performing the removal notification display 38 or the removal notification display 39 and the refilling notification display 44 in parallel and in display manners that differ from each other.

That is, as an example, the projection controller (the controller 22) is capable of causing the image projection unit (the projector 20) to perform the refilling notification display 44 that prompts refilling of the accommodating area (the magazine 15) with the tobacco product 11 in accordance with a result of management by the remaining-number managing unit, and causing the image projection unit to perform the refilling notification display 44 and the removal notification displays 38 and 39 in parallel and in manners that differ from each other.

In the same way as detecting incorrect removal in each embodiment described above, the tobacco fixture 100 may be capable of detecting, by image recognition, incorrect refilling, which is refilling of a magazine 15 that differs from the magazine 15 corresponding to the tobacco product 11 that needs refilling.

When incorrect refilling is detected, for example, as illustrated in Fig. 15(b), an incorrect-refilling notification display 46 such as "Refilling place is incorrect. Refill place glowing yellow." is performed on the display screen 17.

When it is necessary to refill the tobacco products 11 of a plurality of brands, preferably, the refilling notification display 44 includes, for example, information indicating the order of priority.

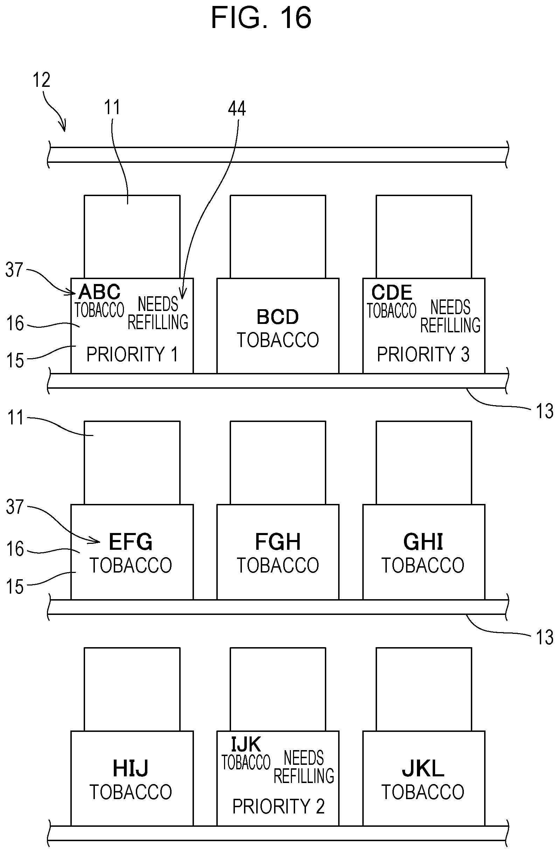

Examples of information indicating the order of priority include, as illustrated in Fig. 16, a display of character information such as "Priority 1", "Priority 2", and "Priority 3", in descending order of refilling priority.

However, the order of priority may be indicated by using the projection color, instead of the character information or in addition to the character information. For example, the projection color may be set in such a way that a brand whose projection color to the front wall 16 of the corresponding magazine 15 is red has the highest order of priority and a brand whose projection color is yellow has the second highest order of priority.

The order of refilling priority can determined by the controller 22 based on sales records (trend information indicating the trend of units sold) and the stock level.

### [Fifth Embodiment]

Next, referring to Figs. 17(a) to 17(c), a fifth embodiment will be described.

In the present embodiment, the tobacco fixture 100 includes, instead of the distance sensor 29 described above, a slider-position detector that detects the position of the slider 35 in the front-back direction.

The slider-position detector constitutes, for example, together with the controller 22, an incorrect-removal detector that detects incorrect removal, which is removal of the tobacco product 11 from the magazine 15 that differs from a removal request.

The slider-position detector constitutes, for example, together with the controller 22, a remaining-number managing unit that manages the remaining number of the tobacco products 11 in each of the plurality of magazines 15.

As illustrated in Fig. 17(a), the slider-position detector includes, for example, an electrode unit 67 disposed on the shelf 13 and an electrode 69 provided on a lower part 35a of the slider 35 (Fig. 17(c): described below).

As illustrated in Fig. 17(b), the electrode unit 67 is a member that is elongated in the front-back direction and includes a plurality of electrodes 66 that are arranged at a predetermined interval in the front-back direction.

Here, a slit 33a, which extends in the front-back direction, is formed in a middle part of the bottom plate portion 33 of the magazine 15 in the width direction. Both side parts of the bottom plate portion 33, between which the slit 33a is formed, are guide portions that guide the slider 35 in the front-back direction.

The slider 35 holds the both side parts of the bottom plate portion 33, between which the slit 33a is formed, respectively from above and below. The lower part 35a of the slider 35 is disposed below the lower surface of the bottom plate portion 33.

Here, appropriate wires are connected to each electrode 66 and the electrode 69, and the electrode 69 and the electrode 66 constitute a capacitor. When the position of the slider 35 changes in the front-back direction, an electrode 66 adjacent to the electrode 69 changes, and thus an electrode 66 that constitutes a capacitor together with the electrode 69 successively change. The controller 22 includes a determination circuit that determines the capacitance of each electrode 66, and detects the position of the slider 35 in the front-back direction based on the result of determination by the determination circuit.

In the present embodiment, the controller 22 calculates the remaining number of the tobacco products 11 in each magazine 15 based on the thickness for each brand and the result of detection by the slider-position detector.

Thus, the slider-position detector includes a plurality of position detectors (for example, the electrodes 66) that are arranged at a predetermined interval in the front-back direction and each of which is used to detect the position of the slider 35. The slider-position detector includes a first electrode (the electrode 69) that is provided on the slider 35, each of the plurality of position detectors is a second electrode (the electrode 66), and the slider-position detector further includes a determination circuit that determines the capacitance of each second electrode and detects the position of the slider 35 in the front-back direction based on the result of determination by the determination circuit.

The present invention is not limited to this example. The electrode 69 may be configured to become electrically connected selectively to either one of the electrodes 66 in accordance with the position of the slider 35 in the front-back direction. In this case, the controller 22 detects the position of the slider 35 in the front-back direction in accordance with which electrode 66 has become electrically connected to the electrode 69.

In the present embodiment, the controller 22 may cause the storage unit 26 to store a sales record for each brand based on the result of detection by the slider-position detector.

The controller 22 may monitor whether the number of the tobacco products 11 removed from the tobacco fixture 100 is excessive or deficient based on the result of detection by the slider-position detector.

In the present embodiment, the tobacco fixture 100 need not include the camera 21 described above.

### [Sixth Embodiment]

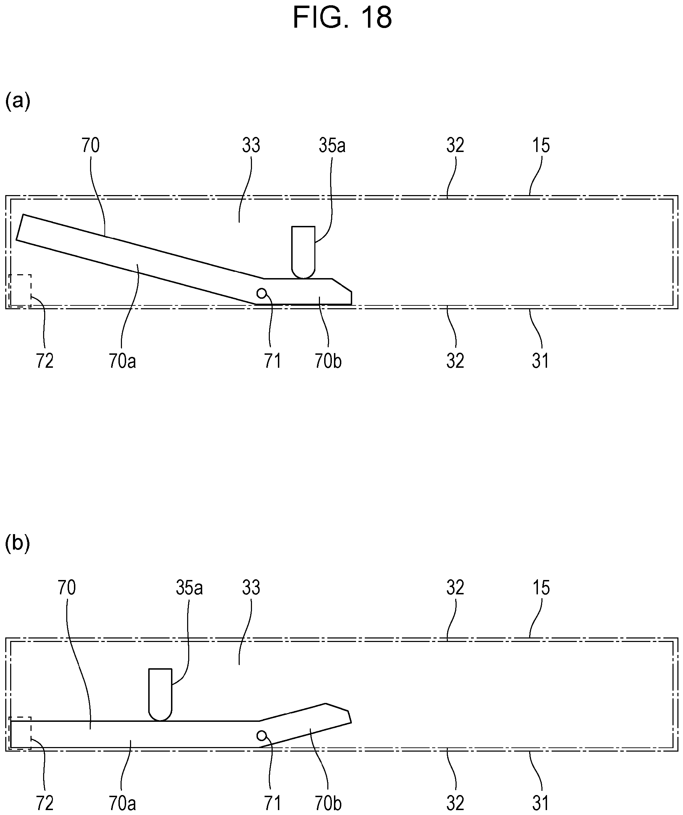

Next, referring to Figs. 18(a) and 18(b), a sixth embodiment will be described.

As illustrated in Figs. 18(a) and 18(b), in the present embodiment, the magazines 15 includes a swing member 70 that is provided on the mount portion 31 so as to be swingable with respect to the mount portion 31. The swing member 70 includes, for example, a front part 70a and a back part 70b each of which extends linearly. The swing member 70 has a bent shape that is bent at the boundary between the front part 70a and the back part 70b.

The swing member 70 is disposed on the lower side of the bottom plate portion 33, and is pivotally supported by the bottom plate portion 33 of the mount portion 31 via a pivot portion 71 at the boundary between the front part 70a and the back part 70b. The axial direction of the pivot portion 71 is a direction perpendicular to the bottom plate portion 33, that is, the vertical direction.

The swing member 70 can swing relative to the bottom plate portion 33 with the pivot portion 71 as the swing axis.

Moreover, in the present embodiment, the tobacco fixture 100 includes a switch 72 that detects a swing of the swing member 70. The switch 72 is disposed, for example, at a position corresponding to a front end portion of the mount portion 31. The switch 72 may be provided on the mount portion 31 or may be provided on the shelf 13.

As illustrated in Fig. 18(a), in a state in which the lower part 35a of the slider 35 is located behind the pivot portion 71, for example, the back part 70b, among the front part 70a and the back part 70b of the swing member 70, extends in the front-back direction along one side wall 32 of the mount portion 31.

In this state, a front end portion of the front part 70a is separated from the switch 72, and the switch 72 does not detect the front part 70a.

On the other hand, as illustrated in Fig. 18(b), when the lower part 35a of the slider 35 moves to a position in front of the pivot portion 71, the front part 70a of the swing member 70 is pushed by the lower part 35a and the swing member 70 swings with the pivot portion 71 as the fulcrum, and the front part 70a, among the front part 70a and the back part 70b, extends in the front-back direction along the one side wall 32 of the mount portion 31.

In this state, the front end portion of the front part 70a overlaps the switch 72, and the switch 72 detects the front part 70a.

A detection signal obtained by the switch 72 is input to the controller 22. When the controller 22 receives the detection signal indicating that the switch 72 has detected the front part 70a, the controller 22 recognizes that the remaining number of the tobacco products 11 in the magazine 15 has become less than or equal to a predetermined number.

In the present embodiment, the switch 72 and the controller 22 constitute a remaining-number managing unit that manages the remaining number of the tobacco products 11 in each of the plurality of magazines 15.

Thus, in the present embodiment, each of the plurality of accommodating areas is the magazine 15; the magazine 15 includes the mount portion 31 on which the plurality of tobacco products 11 are mounted in an aligned state in which the tobacco products 11 are arranged in the front-back direction, the slider 35 that is movable in the front-back direction along the mount portion 31, the urging portion 36 that urges the slider 35 forward, and the swing member 70 that swings in accordance with the position of the slider 35 in the front-back direction; and the remaining-number managing unit includes a swing detector (the switch 72, the controller 22) that detects a swing of the swing member 70.

The swing detector electrically detects a swing of the swing member 70. Preferably, the swing detector includes a pressed portion that is pressed by the swing member 70 and a press detector that detects that the pressed portion is pressed. That is, preferably, the swing detector is a press switch.

In the present embodiment, the controller 22 may cause the storage unit 26 to store a sales record for each brand based on the result of detection by the switch 72.

The controller 22 may monitor whether the number of the tobacco products 11 removed from the tobacco fixture 100 is excessive or deficient based on the result of detection by the switch 72.

### [Seventh Embodiment]

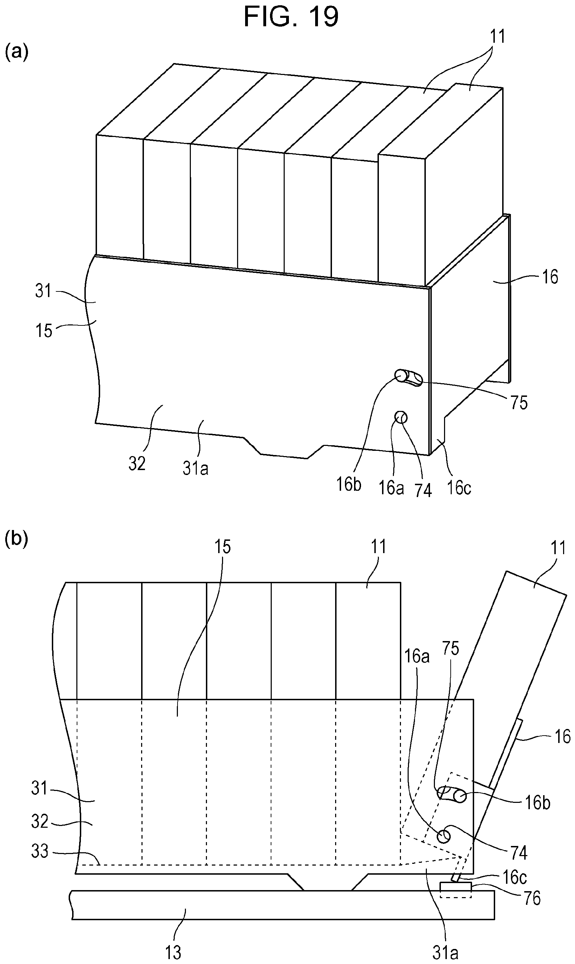

Next, referring to Figs. 19(a) and 19(b), a seventh embodiment will be described.

In the present embodiment, the front wall 16 of the magazine 15 is a flap portion and is supported by front end portions of the pair of side walls 32 in a state in which the front wall 16 can incline forward.

As illustrated in Figs. 19(a) and 19(b), the front wall 16 includes a pair of left and right pivot protrusions 16a and a pair of left and right guided protrusions 16b that are respectively provided on the left end portion and the right end portion of the front wall 16.

Here, a part of the mount portion 31 excluding the front wall 16 will be referred to as a body portion 31a.

The pivot protrusions 16a are inserted into pivot holes 74 that are respectively formed in front end portions of the left and right side walls 32 of the mount portion 31. Thus, the front wall 16 can become inclined forward relative to the body portion 31a with the left and right pivot protrusions 16a as swing fulcrums (Fig. 19(b)).

The guided protrusions 16b are inserted into arc-shaped guide holes 75 that are respectively formed in the front end portions of the side walls 32 of the mount portion 31. Thus, each the guided protrusions 16b is guided by a corresponding one of the guide holes 75. The forward inclination angle of the front wall 16 is limited by the range in which the guided protrusions 16b are guided by the guide holes 75 (an angular range around the pivot protrusions 16a).

When the tobacco product 11 mounted at the forefront position of the mount portion 31 is removed from the mount portion 31, the front wall 16 inclines forward relative to the body portion 31a (Fig. 19(b)).

After the tobacco product 11 has been removed from the mount portion 31, the front wall 16 returns under its own weight to a normal state illustrated in Fig. 19(a), that is, an upright state.

The front wall 16 has a pressing protrusion 16c that protrudes to a position below a lower end of a front end of the side wall 32 in a forward inclined state.

On the other hand, on an upper surface of a front end portion of the shelf 13, a switch 76 that is to be pressed by the pressing protrusion 16c when the front wall 16 inclines is provided.

Every time the switch 76 is pressed by the pressing protrusion 16c, the switch 76 outputs a detection signal to the controller 22.

When the detection signal is input from the switch 76, the controller 22 recognizes that the tobacco product 11 is removed from the magazine 15.

In the present embodiment, the switch 76 constitutes, together with the controller 22, an incorrect-removal detector that detects incorrect removal, which is removal of the tobacco product 11 from the magazine 15 that differs from a removal request.

The switch 76 constitutes, together with the controller 22, a remaining-number managing unit that manages the remaining number of the tobacco products 11 in each of the plurality of magazines 15. In this case, the controller 22 counts the number of detection signals input from the switch 76.

Thus, in the present embodiment, each of the plurality of accommodating areas is the magazine 15; the magazine 15 includes the mount portion 31 on which the plurality of tobacco products 11 are mounted in an aligned state in which the tobacco products 11 are arranged in the front-back direction, the slider 35 that is movable in the front-back direction along the mount portion 31, and the urging portion 36 that urges the slider 35 forward; the mount portion 31 includes the body portion 31a on which the plurality of tobacco products 11 are mounted, and the flap portion that is provided so as to be swingable with respect to the front end portion of the body portion 31a and that constitutes the front wall 16 of the mount portion 31; the flap portion inclines forward relative to the body portion 31a when one of the tobacco products 11 that is mounted at the forefront position of the mount portion 31 is removed from the mount portion 31; and the incorrect-removal detector includes a forward-inclination detector (the switch 76 and the controller 22) that detects a forward inclining motion of the flap portion.

The forward-inclination detector electrically detects a forward inclining motion of the flap portion. Preferably, the forward-inclination detector includes a pressed portion that is pressed by the flap portion and a press detector that detects that the pressed portion is pressed. That is, preferably, the forward-inclination detector is a press switch.

Alternatively, in the present embodiment, the remaining-number managing unit includes a forward-inclination detector (the switch 76 and the controller 22) that detects a forward inclining motion of the flap portion.

In the present embodiment, the controller 22 may cause the storage unit 26 to store a sales record for each brand based on the result of detection by the switch 76.

The controller 22 may monitor whether the number of the tobacco products 11 removed from the tobacco fixture 100 is excessive or deficient based on the result of detection by the switch 76.

In the present embodiment, the tobacco fixture 100 need not include the camera 21, the distance sensor 29, and the slider-position detector described above.

### [Eighth Embodiment]

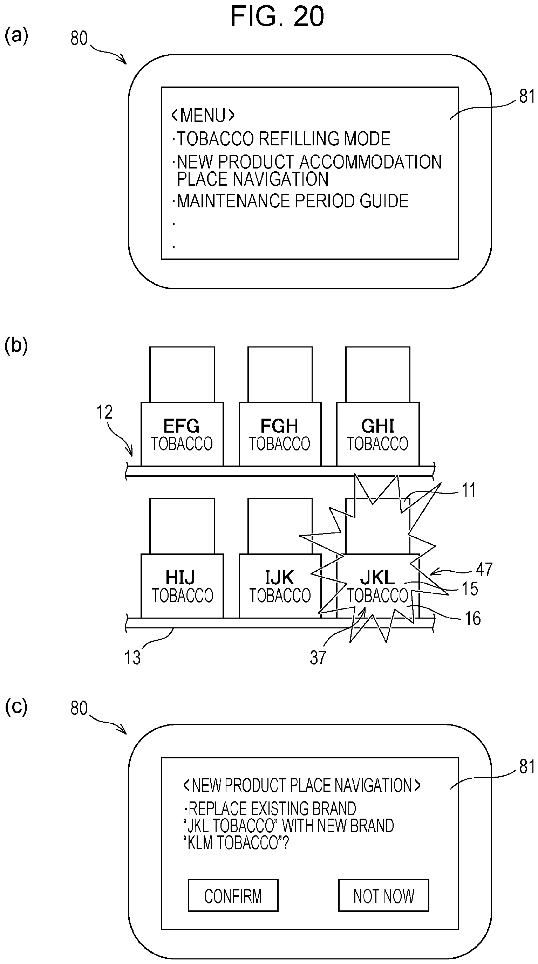

Next, referring to Figs. 20(a) to 20(c), an eighth embodiment will be described.

In an example described in the present embodiment, for example, when products to be newly handled, such as new products, are delivered to a shop, the tobacco fixture 100 guides a candidate for a magazine 15 for accommodating the newly handled products.

For example, as illustrated in Fig. 20(a), a tobacco fixture 100 includes an operation tablet 80 operated by an operator. The operation tablet 80 may also function as the brand-specifying-information acquiring unit 27 or may be different from the brand-specifying-information acquiring unit 27.

A menu screen that allows selection of various operation modes is displayed on a display screen 81 of the operation tablet 80.

Menus that are selectable on the menu screen include, for example, "New Product Accommodation Place Navigation". When an operator performs a touch operation to select "New Product Accommodation Place Navigation" on the menu screen, the projector 20 projects an image under the control of the controller 22, and thus, for example, as illustrated in Fig. 20(b), a candidate-area guide display 47 that guides a candidate for a magazine 15 for accommodating the new tobacco product 11 is displayed.

The candidate-area guide display 47 may be, for example, a display similar to the removal notification display 38 or may be a display in a manner different from the removal notification display 38.

Thus, the tobacco fixture 100 includes a new-accommodation-request receiving unit (for example, the operation tablet 80) that receives a new accommodation request (for example, a touch operation of selecting "New Product Accommodation Place Navigation") that is a request that a new tobacco product 11 be accommodated in the accommodating area (the magazine 15); and, when the new-accommodation-request receiving unit receives the new accommodation request, the projection controller (the controller 22) causes the image projection unit (the projector 20) to perform the candidate-area guide display 47 that guides a candidate for the accommodating area for accommodating the new tobacco product 11.

The controller 22 selects a magazine 15 on the front wall 16 of which the candidate-area guide display 47 is to be performed by, for example, determination processing described below.

First, the controller 22 refers to the memory contents of the storage unit 26 and determines whether or not a vacant magazine 15 for which a tobacco product 11 to be accommodated has not been set exists.

If a vacant magazine 15 exists, the controller 22 causes the candidate-area guide display 47 to be performed on the front wall 16 of a magazine 15 that is one of vacant magazines 15.

On the other hand, if a vacant magazine 15 does not exist, the controller 22 distinguishes and selects, for example, a magazine 15 corresponding to a brand that has not been selling well based on the sales results, and causes the candidate-area guide display 47 to be performed on the front wall 16 of the magazine 15. If there are a plurality of brands whose sales results are smaller or equal to a predetermined threshold, the controller 22 may cause the candidate-area guide display 47 to be performed on each of the front walls 16 of the magazines 15 corresponding to the plurality of brands.

Moreover, for example, as illustrated in Fig. 20(c), a selection screen for selecting whether or not to confirm replacement of brands is displayed on the display screen 81.

For example, a display of "Replace existing brand 'JKL Tobacco' with new brand 'KLM Tobacco'?", and selection buttons "Confirm" and "Not now" are displayed.

When an operator selects "Confirm", the controller 22 performs update processing for registering a magazine 15 that has been the accommodation place for "JKL Tobacco" as the accommodation place for "KLM Tobacco". That is, the controller 22 rewrites the memory contents of the storage unit 26. Moreover, the controller 22 finishes the candidate-area guide display 47.

On the other hand, when the operator selects "Not now" on the selection screen shown in Fig. 20(c), the controller 22 does not rewrite the memory contents of the storage unit 26 and finishes the candidate-area guide display 47.

### [Ninth Embodiment]

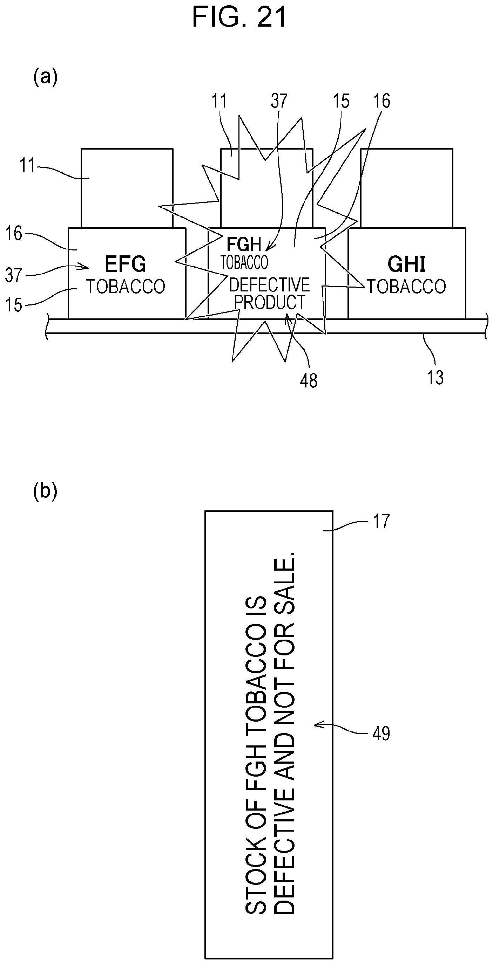

Next, referring to Figs. 21(a) and 21(b), a ninth embodiment will be described.

Figs. 21(a) and 21(b) are front views illustrating an example of a notification display performed when the controller 22 recognizes that the tobacco product 11 of a certain brand is a defective product. Among these, Fig. 21(a) illustrates an example of a notification display (a defective-product-information display 48) performed on the front wall 16 of the magazine 15, and Fig. 21(b) illustrates an example of a notification display (a defective-product-information display 49) performed on the display screen 17.

For example, by displaying "Defective product" as the defective-product-information display 48 as illustrated in Fig. 21(a) or by displaying "Stock of FGH tobacco is defective and not for sale." as illustrated in Fig. 21(b), an operator is prompted to pay attention and can be prevented from selling the defective product.

When an operator mistakenly removes a defective tobacco product 11 from the magazine 15, if the mistaken removal is detected, the controller 22 notifies the operator not to sell the tobacco product 11 by using an image projected by the projector 20 or a voice from a speaker (not shown).

### [Tenth Embodiment]

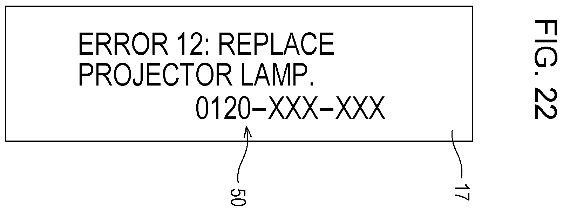

Next, referring to Fig. 22, a tenth embodiment will be described.

In the present embodiment, the controller 22 manages at any time the status of use of the tobacco fixture 100 and the status of deterioration of each component of the tobacco fixture 100.

For example, if the controller 22 determines that the time for replacement of a component (as an example, the lamp of the projector 20) of the tobacco fixture 100 has arrived, for example, as illustrated in Fig. 22, a component-replacement information display 50 of "Error 12: Replace projector lamp. 0120-XXX-XXX" is performed. An operator can receive component replacement service by calling the phone number included in the component-replacement information display 50.

For example, there may be a case where the tobacco fixtures 100 of a plurality of shops are communicably connected to a server device (not shown) via a network, and the server device may collect various information items (such as sales records) at any time. In such a case, if a failure such as disconnection of the network occurs, for example, a notification display indicating the occurrence of the communication failure may be performed on the display screen 17.

### [Eleventh Embodiment]

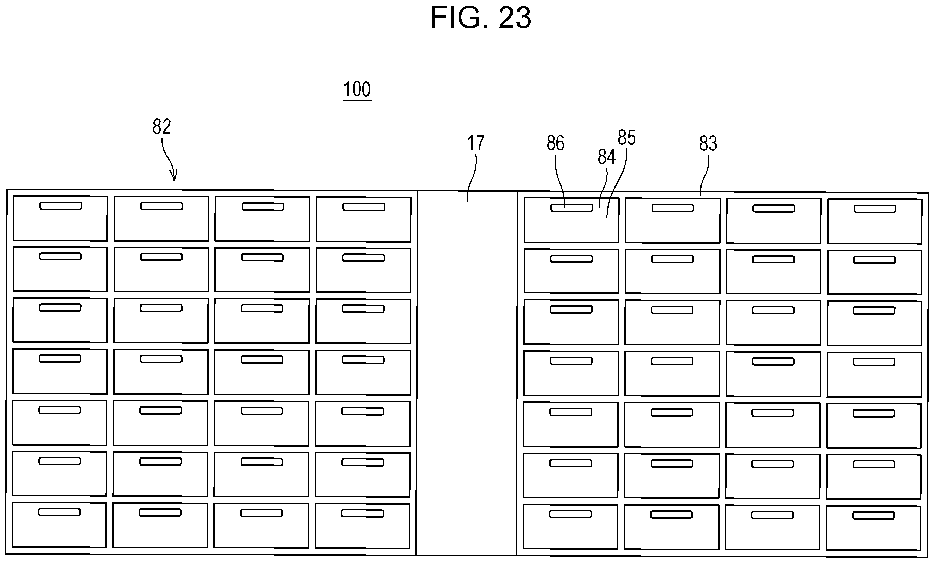

Next, referring to Figs. 23 to 24(b), an eleventh embodiment will be described.

In the example in each embodiment described above, the tobacco fixture 100 includes the magazine fixture 60. However, in the present embodiment, the tobacco fixture 100 includes a drawer fixture 82 instead of the magazine fixture 60.

The drawer fixture 82 includes, for example, a frame 83 and a plurality of accommodation drawers 84 that are held by the frame 83 so as to be capable of being drawn out forward by an operator.

On a front wall 85 of the accommodation drawer 84, a handle 86 that an operator hooks a finger when pulling out the accommodation drawer 84 forward is provided. After pulling out the accommodation drawer 84 from the frame 83, the operator can cause the accommodation drawer 84 to be accommodated in the frame 83 again by pushing the accommodation drawer 84.

In the present embodiment, the accommodation drawer 84 is an accommodating area.

In the present embodiment, by projecting an image to the front wall 85 of the accommodation drawer 84 by using the projector 20, various displays (various displays similar to those performed on the front wall 16) described above in each embodiment are performed on the front wall 85.

In the present embodiment, the tobacco fixture 100 includes a lock mechanism 87 described below so that the tobacco fixture 100 can suppress incorrect removal of mistakenly pulling out the accommodation drawer 84 from which the tobacco product 11 should not be removed or mistakenly removing the tobacco product 11 from the accommodation drawer 84 and can suppress incorrect refilling of mistakenly pulling out the accommodation drawer 84 that should not be refilled or mistakenly refilling the accommodation drawer 84 with the tobacco product 11.

The lock mechanism 87 makes it possible to selectively draw out from the frame 83 the accommodation drawer 84 corresponding to brand specifying information acquired by the brand-specifying-information acquiring unit 27.

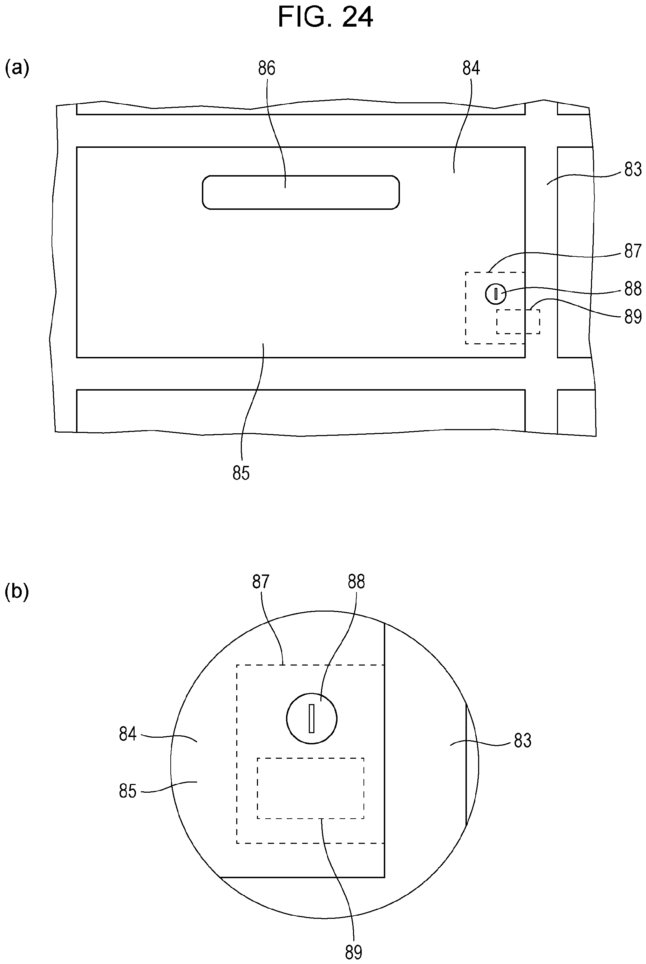

The lock mechanism 87 includes, for example, an engagement member 89; a locking actuator (not shown) such as a solenoid or a motor; a power transmission mechanism (not shown) that transmits, from the locking actuator to the engagement member 89, power for moving the engagement member 89 to an engaged position (the position shown in Fig. 24(a)) and to an unengaged position (the position shown in Fig. 24(b)); and a key-insertion portion 88 with which an operator performs a key operation to manually move the engagement member 89 to the unengaged position and to the engaged position during an electrical power failure or the like.

The engaged position is a position where the engagement member 89 becomes engaged with (latched to) the frame 83 when the accommodation drawer 84 is attempted to be pulled out from the frame 83, and thus pulling out of the accommodation drawer 84 from the frame 83 is restricted. The unengaged position is a position where the engagement member 89 does not become engaged with (latched to) the frame 83 when the accommodation drawer 84 is pulled out from the frame 83, and thus pulling out of the accommodation drawer 84 from the frame 83 is allowed.

The key-insertion portion 88 has a keyhole into which an unlock key (not shown) is to be inserted. By inserting the unlock key into the keyhole and rotating the unlock key, an operator can move the engagement member 89 from the engaged position to the unengaged position, and can move the engagement member 89 from the unengaged position to the engaged position.

In the example described here, the lock mechanism 87 is provided on the accommodation drawer 84 and the engagement member 89 becomes latched to the frame 83 in the locked state. However, the lock mechanism 87 may be provided on the frame 83, and the engagement member 89 may become latched to the accommodation drawer 84 in the locked state.

In the present embodiment, in normal time, the engagement members 89 of the lock mechanisms 87 corresponding to all accommodation drawers 84 are at the engaged positions. When the brand-specifying-information acquiring unit 27 acquires brand specifying information, it becomes possible to selectively draw out from the frame 83 the accommodation drawer 84 corresponding to the brand specifying information acquired by the brand-specifying-information acquiring unit 27, because the locking actuator moves the engagement member 89 under the control of the controller 22.

### [Twelfth Embodiment]

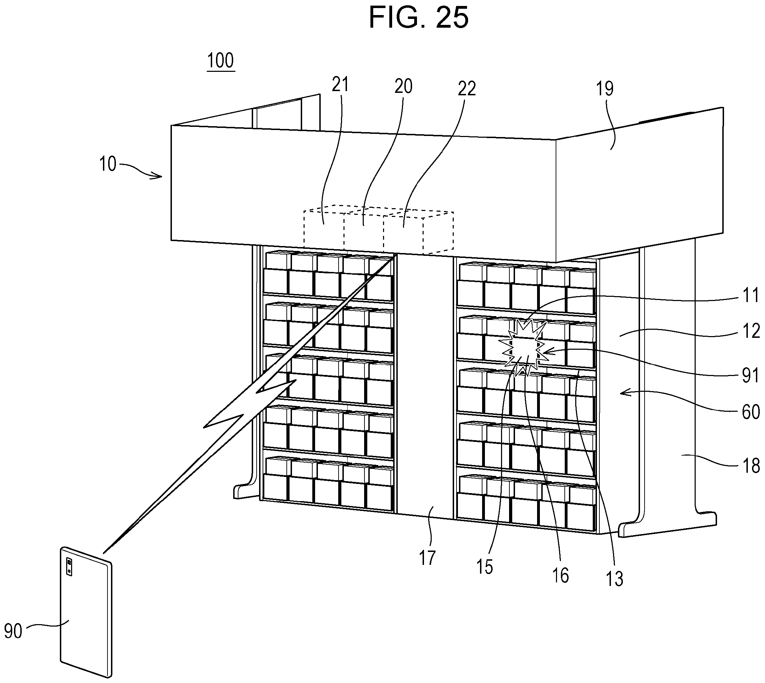

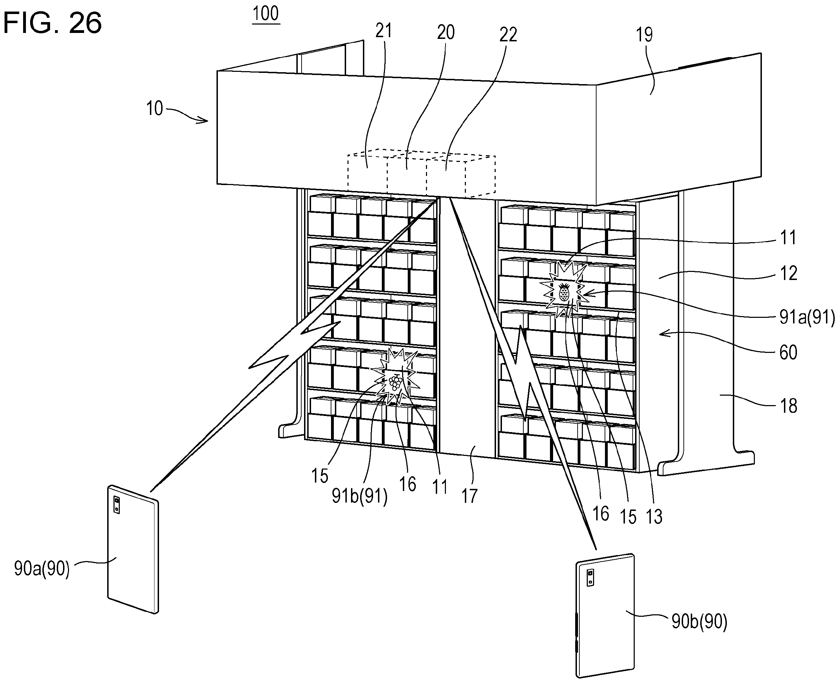

Next, referring to Figs. 25 and 26, a twelfth embodiment will be described.

In an example described in the present embodiment, the brand-specifying-information acquiring unit 27 of the tobacco fixture 100 automatically acquires brand specifying information from a mobile terminal device 90 of a user who visits a shop such as a convenience store, and the projector 20 projects an image to perform a display (a specific notification display 91) on the tobacco fixture 100.

A method of communication between the mobile terminal device 90 and the tobacco fixture 100 is not particularly limited, and an example of the method is near field communication such as Bluetooth (registered trademark).

In a storage unit (not shown) of the mobile terminal device 90, information of a brand that the user usually smokes (favorite brand) is registered.

Moreover, it is assumed that, when the favorite brand of a user is sold in a shop in which the tobacco fixture 100 is set, the user has performed beforehand on the mobile terminal device 90 a setting operation of setting whether or not to perform the specific notification display 91 of notifying the location of the tobacco product 11 of the favorite brand.

In the case where the user has selected the setting for performing the specific notification display 91, when the user visits the shop with the mobile terminal device 90, the brand-specifying-information acquiring unit 27 of the tobacco fixture 100 automatically performs near field communication with the mobile terminal device 90 and obtains information on the favorite brand of the user as brand specifying information.

As a result, as illustrated in Fig. 25, the specific notification display 91 is performed on the front wall 16 of the magazine 15 that accommodates the favorite brand of the user.

Therefore, the user can recognize that the specific notification display 91 is performed on the tobacco fixture 100. Thus, it is possible to increase the user's willingness to purchase.

Near field communication between the mobile terminal device 90 and the tobacco fixture 100 is performed, for example, in either of a case where the power of the mobile terminal device 90 is turned on and a case where the power is turned off.

When a plurality of users who have performed on their mobile terminal devices 90 a setting for performing the specific notification display 91 visit the shop, it is also preferable that the specific notification display 91 can be performed in a display manner for each user so that each user can easily recognize the favorite brand of the user from a distance.

As an example, a specific notification display 91 including an image of a pictogram that each user has selected (for example, the user's favorite fruit, animal, or another character) or a specific notification display 91 in a projection color that each user has selected.

In the example shown in Fig. 26, a user having a mobile terminal device 90a and a user having a mobile terminal device 90b visit the same shop, and a specific notification display 91a including an image (for example, an image of a pineapple) set in the mobile terminal device 90a and a specific notification display 91b including an image (for example, an image of grapes) set in the mobile terminal device 90b are performed in parallel.

In the example described above in the twelfth embodiment, the brand-specifying-information acquiring unit 27 acquires the brand specifying information from the mobile terminal device 90. However, the brand-specifying-information acquiring unit 27 may acquire the brand specifying information from, for example, a server device (not shown) managed by the maker of the tobacco product 11.

In this case, the brand-specifying-information acquiring unit 27 may acquire, for example, only the identification information (ID information) of a user from the mobile terminal device 90 and acquires information (brand specifying information) of the favorite brand corresponding to the identification information from the server device.

The brand-specifying-information acquiring unit 27 may also acquire from the server device the information indicating whether or not a user has selected a setting for performing the specific notification display 91.

Heretofore, embodiments have been described with reference to the drawings. However, these embodiments are examples of the present invention, and various configurations other than those described above may be used.

For example, the tobacco fixture 100 that accommodates the tobacco products 11 may be a ceiling-hung fixture.

In an example described above, a salesperson inputs the number of the tobacco products 11 that a purchaser wants to purchase to the brand-specifying-information acquiring unit 27. However, the present invention is not limited to this example. Simply, a salesperson may orally ask a purchaser about the number, and the salesperson may remove the number of the tobacco products 11 heard from the purchaser from an accommodating area.

In an example described above, the display screen 17 is disposed at a central part of the front portion of the magazine fixture 60 in the lateral width direction. However, the display screen 17 may be disposed at another position, such as an end of the front portion of the magazine fixture 60 in the lateral width direction or at an upper part of the front portion of the magazine fixture 60.

In an example described above, when a display notification is performed on the front wall 16 of the magazine 15 or the front wall 85 of the accommodation drawer 84, a display notification is additionally performed at a position (for example, the display screen 17) that differs from the accommodating area. However, the present invention is not limited to this example. A display notification may be performed only at a position (for example, the display screen 17) that differs from the accommodating area.

For example, in the first embodiment, a display such as "Remove tobacco from third magazine from right on uppermost tier." or a display such as "Refill third magazine from right on uppermost tier with tobacco." can be performed on the display screen 17. Likewise, in the eleventh embodiment, a display such as "Remove tobacco from third magazine from right on uppermost tier." or a display such as "Refill third magazine from right on uppermost tier with tobacco." can be performed on the display screen 17. With these displays, without performing a display notification of an accommodating area (the magazine 15 or the accommodation drawer 84) that corresponds to the brand specifying information, it is possible to perform, at another place (the display screen 17), for example, a display notification in such a manner as to enable identification of, among the plurality of accommodating areas, an accommodating area that corresponds to the brand specifying information acquired by the brand-specifying-information acquiring unit 27.

In an example described above, the projector 20 projects an image to perform display in such a manner as to enable identification of, among the plurality of accommodating areas, an accommodating area that corresponds to the brand specifying information acquired by the brand-specifying-information acquiring unit 27. However, the present invention is not limited to this example. A light emitting member such as a LED or another display body may perform display in such a manner as to enable identification of an accommodating area that corresponds to the brand specifying information acquired by the brand-specifying-information acquiring unit 27.

That is, the tobacco fixture 100 according to the present invention includes, as an example, a plurality of accommodating areas that respectively accommodate a plurality of tobacco products 11 so as to be removable by an operator, the brand-specifying-information acquiring unit 27 that acquires brand specifying information that specifies the brand of the tobacco product 11, and the controller 22 that performs control to cause a display to be performed in such a manner as to enable identification of, among the plurality of accommodating areas, an accommodating area that corresponds to the brand specifying information acquired by the brand-specifying-information acquiring unit 27.

In an example described above, mainly, the projection controller performs control to cause the image projection unit to perform display in such a manner as to enable identification of, among the plurality of accommodating areas, an accommodating area that corresponds to the brand specifying information acquired by the brand-specifying-information acquiring unit 27. However, the present invention is not limited to this example.

The controller 22 performs, for example, control that causes information (campaign information) for joining a campaign related to the tobacco product 11 corresponding to brand specifying information acquired by the brand-specifying-information acquiring unit 27. Examples of the campaign information include identification information (for example, a QR code (registered trademark)). Thus, for example, it is possible to perform display that corresponds to the tobacco product 11 that a purchaser has purchased. In this case, the tobacco fixture may be a so-called front fixture that is set on a sales counter. The place where the image projection unit performs a display may be, for example, the back wall 34 of the magazine 15 or may be the back wall 14 of the magazine accommodation rack 12. The place where a display is performed is not particularly limited. The back wall 34 of the magazine 15 that accommodates the tobacco product 11 corresponding to brand specifying information acquired by the brand-specifying-information acquiring unit 27 may be at a position behind the magazine 15, may be a range extending across the back walls 34 of a plurality of magazines 15, or may be the entire surface of the back wall 14.

A purchaser may voluntarily perform an operation of specifying the brand of the tobacco product. In this case, for example, the purchaser selects the type of the tobacco product 11 that the purchaser wants to purchase by operating a touch panel. That is, by operating the touch panel, the purchaser selects purchase of the tobacco product and further specifies a brand to be removed from the tobacco fixture 100 by selecting the brand from a brand list displayed on the touch panel. Also in this case, when the brand specifying operation is performed, the removal notification display 38 is performed on a magazine 15 in which the specified tobacco product 11 is accommodated. Thus, a salesperson can recognize the position of the magazine 15 from which the tobacco product 11 is to be removed, and thus can remove the tobacco product 11 from the magazine 15 and perform sales processing. A purchaser may voluntarily perform the operation of removing the tobacco product 11 from the magazine 15 in accordance with the removal notification display 38.

Also in a case where the purchaser specifies a brand of the tobacco product 11, the purchaser may be enabled to specify the brand by performing voice input of the brand name to a microphone. Also in this case, when the brand is specified, the removal notification display 38 is performed on a magazine 15 in which the specified tobacco product 11 is accommodated.

Thus, the brand-specifying-information acquiring unit 27 acquires brand specifying information that is input by a purchaser (via, for example, a selection operation or voice input).

An operation with which a purchaser specifies a brand of tobacco product may be an operation such that the purchaser holds the bar code of the tobacco product 11 in front of a bar-code reader to cause the bar-code reader to read the bar code.

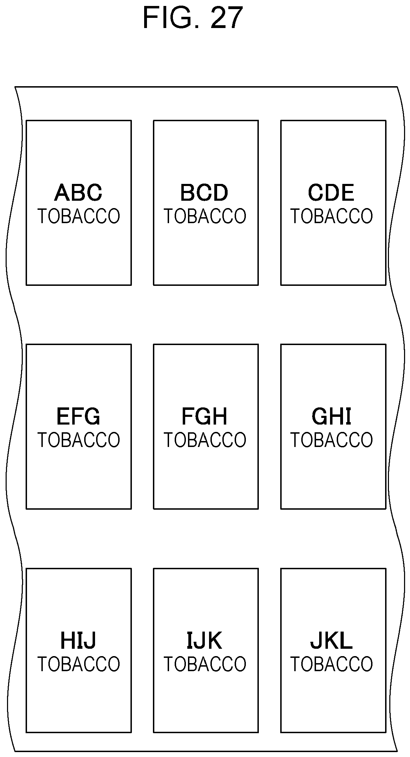

On a display screen of a display device of the tobacco fixture 100 (for example, a touch panel operation screen of an operation tablet or the like), for example, as illustrated in Fig. 27, images of the tobacco products 11 accommodated in the magazines 15 of the tobacco fixture 100 and the like may be displayed in an arrangement corresponding to (the same as) the arrangement of the magazines 15 in the tobacco fixture 100. That is, the tobacco fixture 100 includes, for example, the display device and a display-device display controller that causes the display device to perform an image display as illustrated in Fig. 27.

Moreover, for example, in a case where the brand-specifying-information acquiring unit 27 of the tobacco fixture 100 automatically acquires brand specifying information from the mobile terminal device 90 of a user as in the twelfth embodiment, on the operation screen illustrated in Fig. 27, a display notification of the position of the tobacco product 11 of a brand corresponding to the acquired brand specifying information may be performed. Also in this case, a purchaser or a salesperson can easily perform a purchasing operation or sales processing of the tobacco product 11 corresponding to the brand specifying information.

Selection of the tobacco product 11 to be purchased may be enabled or notification of the accommodation position of the tobacco product 11 to be purchased may enabled by performing an operation using the mobile terminal device 90 of a user to perform a selection operation on a touch-panel operation screen of an operation tablet.

A plurality of types of dummy cards corresponding to various types of tobacco products 11 may be set in a dummy-card holder provided on a sales counter or the like, and a purchaser may be enabled to voluntarily specify a brand by selecting from the dummy card holder a dummy card corresponding to the tobacco product 11 that the purchaser wants to purchase and by causing brand specifying information to be read from the dummy card.

In this case, in the dummy card, for example, an RFID (Radio Frequency Identification) chip that stores brand specifying information of a corresponding tobacco product 11 and the like is mounted. Information stored in the RFID chip of the dummy card is read by an RFID reader of the tobacco fixture 100.

By managing historical information on pulling out (moving) of a dummy card from the dummy card holder, for example, data management can be performed in association with a result as to whether a tobacco product 11 corresponding to the dummy card is actually purchased or is not actually purchased when the dummy card is moved from the dummy card holder. Thus, it is possible to collect and manage information on the purchase behavior of purchasers.

For example, when an order for a tobacco product 11 is received after age confirmation, various information displays such as advertisement display and a display of campaign information may be performed on the display screen 17 or the like.

As the magazine accommodation rack 12 of the tobacco fixture 100, racks of various sizes or shapes may be prepared, and the racks may be enabled to be selectively used in combination in accordance with the setting space of a shop.

To be more specific, as the magazine accommodation rack 12, a plurality of types that differ in the number of the magazines 15 that can be arranged in the lateral-width direction and differ from each other in the width, a plurality of types that differ from each other in the height and differ from each other in the number of tiers of the shelves 13, a plurality of types that differ from each other in the depth, and the like are prepared. From these, a plurality of magazine accommodation racks 12 can be selectively used in combination. By doing so, the freedom in the layout of the tobacco fixture 100 is increased, and thus it is possible to realize a layout such that the width and the height of the entirety of the tobacco fixture 100 are optimized in accordance with the setting space in each individual shop.

Moreover, preferably, by selecting a combination of a plurality of magazine accommodation racks 12, information indicating the brand of the tobacco products 11 accommodated in each magazine 15 (information stored in the storage unit 26) is updated.

The magazine accommodation racks 12 that are disposed adjacent to each other may be in contact with each other or may be set with a column, which is set in a shop, therebetween. If a beam that protrudes from a ceiling surface or a wall exists in a shop, the magazine accommodation rack 12 having a small height can be selected and set locally so as to avoid the beam. The plurality of magazine accommodation racks 12 need not to be arranged side by side and may be enabled to be arranged so as to be stacked.

In order to couple a plurality of magazine accommodation racks 12 that are disposed adjacent to each other and to couple a plurality of magazine accommodation racks 12 that are disposed so as to be stacked on each other, the side wall, the top surface, or the bottom plate portion of each magazine accommodation rack 12 may include a coupling mechanism.

It is also preferable that the tobacco fixture 100 be configured to raise an alert (alarm) if a person other than a person who is authorized to remove the tobacco product 11 from the tobacco fixture 100 (hereafter, a removal authorized person) tries to remove the tobacco product 11 from the tobacco fixture 100. The removal authorized person may be a salesperson or may be a purchaser.

The tobacco fixture 100 includes, for example, an authentication processor that performs authentication processing for determining whether or not an operator who has performed an operation of removing the tobacco product 11 from the magazine 15 is a removal authorized person, and an alert-raising unit that raises an alert if the authentication processor determines that the operator is not a removal authorized person.

The authentication processor includes, for example, a face-image information storing unit that stores face-image information that has been acquired beforehand from a photograph of the face of a removal authorized person of the person's ID card (driver's license or the like), and an image capturing unit that captures an image of the face of an operator. The authentication processor compares the face image captured by the image capturing unit with the face image information stored in the face-image information storing unit and determines whether or not the operator is a removal authorized person. However, any of various other authentication methods may be used as an authentication method used by the authentication processor.

Such a configuration is particularly useful in a configuration such that the tobacco fixture 100 is a so-called front fixture that is set on a sales counter and a purchaser voluntarily removes the tobacco product 11 from the tobacco fixture 100. In this case, preferably, the authentication processor also performs age confirmation.

Various constituent elements of the present invention need not be elements that are independent from each other, and it is allowed that one constituent element is a part of another constituent element and that a part of a constituent element and a part of another constituent element overlap.

Moreover, the present embodiment includes the following technological ideas.
<1> A tobacco fixture comprising:
   a plurality of accommodating areas each of which accommodates a plurality of tobacco products so as to be removable by an operator;
   a brand-specifying-information acquiring unit that acquires brand specifying information that specifies a brand of the tobacco products;
   an image projection unit that projects an image to perform display in a projection range of the image; and
   a projection controller that controls operation of the image projection unit,
   wherein the projection controller performs control to cause the image projection unit to perform display that corresponds to the brand specifying information acquired by the brand-specifying-information acquiring unit.

Moreover, the present embodiment includes the following technological ideas.
(1) A tobacco fixture comprising:
   a plurality of accommodating areas each of which accommodates a plurality of tobacco products so as to be removable by an operator;
   a brand-specifying-information acquiring unit that acquires brand specifying information that specifies a brand of the tobacco products;
   an image projection unit that projects an image to perform display in a projection range of the image; and
   a projection controller that controls operation of the image projection unit,
   wherein the projection controller performs control to cause the image projection unit to perform display in such a manner as to enable identification of, among the plurality of accommodating areas, an accommodating area that corresponds to the brand specifying information acquired by the brand-specifying-information acquiring unit.
(2) The tobacco fixture according to (1), wherein the projection controller causes the image projection unit to perform display that causes the accommodating area that corresponds to the brand specifying information to be noticeable compared with the surroundings.
(3) The tobacco fixture according to (1) or (2),
   wherein the brand-specifying-information acquiring unit acquires a removal request for removing a tobacco product and the brand specifying information corresponding to the removal request, and
   wherein the projection controller causes the image projection unit to perform a removal notification display that prompts removal of the tobacco product from the accommodating area.
(4) The tobacco fixture according to (3), wherein the projection controller causes the image projection unit to display number-specifying information indicating a number of tobacco products that correspond to the removal request and that are to be removed from the accommodating area.
(5) The tobacco fixture according to (3) or (4), wherein the projection controller causes the image projection unit to display sales-terminal specifying information indicating which sales terminal, among a plurality of sales terminals that are set in a shop, is to be used to sell a tobacco product corresponding to the removal request.
(6) The tobacco fixture according to any one of (3) to (5), comprising:
   an incorrect-removal detector that detects incorrect removal that is removal of the tobacco product from the accommodating area that differs from the removal request,
   wherein, when the incorrect removal occurs, the projection controller causes the image projection unit to perform an incorrect-removal notification display indicating that the removal is incorrect.
(7) The tobacco fixture according to (6),
   wherein the incorrect-removal detector includes
   a camera that captures an image of removal of the tobacco product from the plurality of accommodating areas, and
   an incorrect-removal determination unit that determines whether or not incorrect removal has been performed by image recognition using the image captured by the camera.
(8) The tobacco fixture according to (6),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward,
   wherein the mount portion includes
   a body portion on which the plurality of tobacco products are mounted, and
   a flap portion that is provided so as to be swingable with respect to a front end portion of the body portion and that constitutes a front wall of the mount portion,
   wherein the flap portion inclines forward relative to the body portion when one of the tobacco products that is mounted at a forefront position of the mount portion is removed from the mount portion, and
   wherein the incorrect-removal detector includes a forward-inclination detector that detects a forward inclining motion of the flap portion.
(9) The tobacco fixture according to (6),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward, and
   wherein the incorrect-removal detector includes a slider-position detector that detects the position of the slider in the front-back direction.
(10) The tobacco fixture according to (6),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward, and
   wherein the incorrect-removal detector includes a distance sensor that is provided behind the slider and that detects a distance between the distance sensor and the slider or a distance between the distance sensor and one of the tobacco products at a tail end.
(11) The tobacco fixture according to any one of (1) to (10), further comprising:
   a remaining-number managing unit that manages a remaining number of the tobacco products in each of the plurality of accommodating areas,
   wherein the projection controller causes the image projection unit to perform a refilling notification display that prompts refilling of the accommodating area with the tobacco products in accordance with a result of management by the remaining-number managing unit.
(12) The tobacco fixture according to (11),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion,
   an urging portion that urges the slider forward, and
   a swing member that swings in accordance with a position of the slider in the front-back direction, and
   wherein the remaining-number managing unit includes a swing detector that detects a swing of the swing member.
(13) The tobacco fixture according to (11),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward,
   wherein the mount portion includes
   a body portion including the accommodating area, and
   a flap portion that is provided so as to be swingable with respect to a front end portion of the body portion and that constitutes a front wall of the mount portion,
   wherein the flap portion inclines forward relative to the body portion when one of the tobacco products that is mounted at a forefront position of the mount portion is removed from the mount portion, and
   wherein the remaining-number managing unit includes a forward-inclination detector that detects a forward inclining motion of the flap portion.
(14) The tobacco fixture according to (11),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward, and
   wherein the remaining-number managing unit includes a slider-position detector that detects a position of the slider in the front-back direction.
(15) The tobacco fixture according to (11),
   wherein each of the plurality of accommodating areas is a magazine,
   wherein the magazine includes
   a mount portion on which a plurality of tobacco products are mounted in an aligned state in which the tobacco products are arranged in a front-back direction,
   a slider that is movable in the front-back direction along the mount portion, and
   an urging portion that urges the slider forward, and
   wherein the remaining-number managing unit includes a distance sensor that is provided behind the slider and that detects a distance between the distance sensor and the slider or a distance between the distance sensor and one of the tobacco products at a tail end.
(16) The tobacco fixture according to any one of (3) to (10), further comprising:
   a remaining-number managing unit that manages a remaining number of the tobacco products in each of the plurality of accommodating areas,
   wherein the projection controller is capable of
   causing the image projection unit to perform a refilling notification display that prompts refilling of the accommodating area with the tobacco products in accordance with a result of management by the remaining-number managing unit, and
   causing the image projection unit to perform the refilling notification display and the removal notification display in parallel and in manners that differ from each other.
(17) The tobacco fixture according to any one of (1) to (16),
   wherein, in normal time, the projection controller causes normal display that corresponds to the tobacco product accommodated in the accommodating area to be performed on the accommodating area, and
   when the brand-specifying-information acquiring unit acquires the brand specifying information, the projection controller causes a specific notification display in a manner different from the normal display to be performed on the accommodating area that corresponds to the brand specifying information.
(18) The tobacco fixture according to (17),
   wherein, when the brand-specifying-information acquiring unit acquires the brand specifying information, the projection controller causes both of the normal display and the specific notification display to be performed on the accommodating area that corresponds to the brand specifying information.
(19) The tobacco fixture according to any one of (1) to (18), comprising:
   a new-accommodation-request receiving unit that receives a new accommodation request that is a request that a new tobacco product be accommodated in the accommodating area,
   wherein, when the new-accommodation-request receiving unit receives the new accommodation request, the projection controller causes the image projection unit to perform a candidate-area guide display that guides a candidate for the accommodating area for accommodating the new tobacco product.
(20) The tobacco fixture according to any one of (1) to (19),
   wherein the operator is a salesperson of a shop, and
   wherein the brand-specifying-information acquiring unit acquires the brand specifying information that is input by the salesperson.

The present application claims priority on Japanese Patent Application No. 2018-115583 filed on June 18, 2018, the entire contents of which are incorporated herein by reference.

### Reference Signs List

- 10: projection unit
- 11: tobacco product
- 12: magazine accommodation rack
- 13: shelf
- 14: back wall
- 15: magazine (accommodating area)
- 16: front wall (flap portion)
- 16a: pivot protrusion
- 16b: guided protrusion
- 16c: pressing protrusion
- 17: display screen
- 18: support column
- 19: support portion
- 20: projector
- 21: camera
- 22: controller
- 23: CPU
- 24: ROM
- 25: RAM
- 26: storage unit
- 27: brand-specifying-information acquiring unit
- 28: bar-code reader
- 29: distance sensor
- 31: mount portion
- 31a: body portion
- 32: side wall
- 33: bottom plate portion
- 33a: slit
- 34: back wall
- 35: slider
- 35a: lower part
- 36: urging portion
- 37: normal display
- 38: removal notification display (specific notification display)
- 39: removal notification display
- 40: incorrect-removal notification display
- 42: removal notification display
- 43: remaining-number display
- 44: refilling notification display
- 44a: character information
- 44b: image information
- 45: refilling notification display
- 46: incorrect-refilling notification display
- 47: candidate-area guide display
- 48: defective-product-information display
- 49: defective-product-information display
- 50: component-replacement information display
- 51: sales counter
- 52, 52a, 52b: electronic cash register (sales terminal)
- 53, 53a, 53b: salesperson
- 54: fixture setting counter
- 55: floor surface
- 60: magazine fixture
- 61: carton fixture
- 62: frame
- 63: drawer rack
- 64: drawer-rack notification light emitter
- 65: handle
- 66: electrode
- 67: electrode unit
- 68: wire
- 68a: leading end
- 69: electrode
- 70: swing member
- 70a: front part
- 70b: back part
- 71: pivot portion
- 72: switch
- 74: pivot hole
- 75: guide hole
- 76: switch
- 80: operation tablet
- 81: display screen
- 82: drawer fixture
- 83: frame
- 84: accommodation drawer (accommodating area)
- 85: front wall
- 86: handle
- 87: lock mechanism
- 88: key-insertion portion
- 89: engagement member
- 90, 90a, 90b: mobile terminal device
- 91, 91a, 91b: specific notification display
- 100: tobacco fixture

## Claims

1. A tobacco fixture comprising:
a plurality of accommodating areas each of which accommodates a plurality of tobacco products so as to be removable by an operator;
a brand-specifying-information acquiring unit that acquires brand specifying information that specifies a brand of the tobacco products;
an image projection unit that projects an image to perform display in a projection range of the image; and
a projection controller that controls operation of the image projection unit,
wherein the projection controller performs control to cause the image projection unit to perform display that corresponds to the brand specifying information acquired by the brand-specifying-information acquiring unit.

2. The tobacco fixture according to Claim 1, wherein the projection controller performs control to cause the image projection unit to perform display in such a manner as to enable identification of, among the plurality of accommodating areas, an accommodating area that corresponds to the brand specifying information acquired by the brand-specifying-information acquiring unit.

3. The tobacco fixture according to Claim 2,
wherein the brand-specifying-information acquiring unit acquires a removal request for removing a tobacco product and the brand specifying information corresponding to the removal request, and
wherein the projection controller causes the image projection unit to perform a removal notification display that prompts removal of the tobacco product from the accommodating area.

4. The tobacco fixture according to Claim 3, wherein the projection controller causes the image projection unit to display number-specifying information indicating a number of tobacco products that correspond to the removal request and that are to be removed from the accommodating area.

5. The tobacco fixture according to Claim 3 or 4, wherein the projection controller causes the image projection unit to display sales-terminal specifying information indicating which sales terminal, among a plurality of sales terminals that are set in a shop, is to be used to sell a tobacco product corresponding to the removal request.

6. The tobacco fixture according to any one of Claims 3 to 5, comprising:
an incorrect-removal detector that detects incorrect removal that is removal of the tobacco product from the accommodating area that differs from the removal request,
wherein, when the incorrect removal occurs, the projection controller causes the image projection unit to perform an incorrect-removal notification display indicating that the removal is incorrect.

7. The tobacco fixture according to Claim 6,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward,
wherein the mount portion includes
a body portion on which the plurality of tobacco products are mounted, and
a flap portion that is provided so as to be swingable with respect to a front end portion of the body portion and that constitutes a front wall of the mount portion,
wherein the flap portion inclines forward relative to the body portion when one of the tobacco products that is mounted at a forefront position of the mount portion is removed from the mount portion, and
wherein the incorrect-removal detector includes a forward-inclination detector that detects a forward inclining motion of the flap portion.

8. The tobacco fixture according to Claim 6,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward,
wherein the incorrect-removal detector includes a slider-position detector that detects a position of the slider in the front-back direction, and
wherein the slider-position detector includes a plurality of position detectors that are arranged at a predetermined interval in the front-back direction and each of which is used to detect the position of the slider.

9. The tobacco fixture according to Claim 8,
wherein the slider-position detector includes a first electrode that is provided on the slider, and each of the plurality of position detectors is a second electrode, and
wherein the slider-position detector further includes a determination circuit that determines a capacitance of each second electrode and detects the position of the slider in the front-back direction based on a result of determination by the determination circuit.

10. The tobacco fixture according to Claim 6,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward, and
wherein the incorrect-removal detector includes a distance sensor that is provided behind the slider and that detects a distance between the distance sensor and the slider or a distance between the distance sensor and one of the tobacco products at a tail end.

11. The tobacco fixture according to any one of Claims 1 to 10, further comprising:
a remaining-number managing unit that manages a remaining number of the tobacco products in each of the plurality of accommodating areas,
wherein the projection controller causes the image projection unit to perform a refilling notification display that prompts refilling of the accommodating area with the tobacco products in accordance with a result of management by the remaining-number managing unit.

12. The tobacco fixture according to Claim 11,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion,
an urging portion that urges the slider forward, and
a swing member that swings in accordance with a position of the slider in the front-back direction, and
wherein the remaining-number managing unit includes a swing detector that detects a swing of the swing member.

13. The tobacco fixture according to Claim 11,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward,
wherein the mount portion includes
a body portion including the accommodating area, and
a flap portion that is provided so as to be swingable with respect to a front end portion of the body portion and that constitutes a front wall of the mount portion,
wherein the flap portion inclines forward relative to the body portion when one of the tobacco products that is mounted at a forefront position of the mount portion is removed from the mount portion, and
wherein the remaining-number managing unit includes a forward-inclination detector that detects a forward inclining motion of the flap portion.

14. The tobacco fixture according to Claim 11,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward, and
wherein the remaining-number managing unit includes a slider-position detector that detects a position of the slider in the front-back direction.

15. The tobacco fixture according to Claim 14, wherein the slider-position detector includes a plurality of position detectors that are arranged at a predetermined interval in the front-back direction and each of which is used to detect the position of the slider.

16. The tobacco fixture according to Claim 15,
wherein the slider-position detector includes a first electrode that is provided on the slider, and each of the plurality of position detectors is a second electrode, and
wherein the slider-position detector further includes a determination circuit that determines a capacitance of each second electrode and detects the position of the slider in the front-back direction based on a result of determination by the determination circuit.

17. The tobacco fixture according to Claim 11,
wherein each of the plurality of accommodating areas is a magazine,
wherein the magazine includes
a mount portion on which a plurality of tobacco products are mounted in an aligned state in which the tobacco products are arranged in a front-back direction,
a slider that is movable in the front-back direction along the mount portion, and
an urging portion that urges the slider forward, and
wherein the remaining-number managing unit includes a distance sensor that is provided behind the slider and that detects a distance between the distance sensor and the slider or a distance between the distance sensor and one of the tobacco products at a tail end.

18. The tobacco fixture according to any one of Claims 1 to 17, comprising:
a new-accommodation-request receiving unit that receives a new accommodation request that is a request that a new tobacco product be accommodated in the accommodating area,
wherein, when the new-accommodation-request receiving unit receives the new accommodation request, the projection controller causes the image projection unit to perform a candidate-area guide display that guides a candidate for the accommodating area for accommodating the new tobacco product.

19. The tobacco fixture according to any one of Claims 1 to 16,
wherein the operator is a salesperson of a shop, and
wherein the brand-specifying-information acquiring unit acquires the brand specifying information that is input by the salesperson.

20. A tobacco fixture comprising:
a plurality of accommodating areas each of which accommodates a plurality of tobacco products so as to be removable by an operator;
a brand-specifying-information acquiring unit that acquires brand specifying information that specifies a brand of the tobacco products;
an image projection unit that projects an image to perform display in a projection range of the image; and
a projection controller that controls operation of the image projection unit,
wherein the projection controller performs control to cause the image projection unit to perform display in such a manner as to enable identification of, among the plurality of accommodating areas, an accommodating area that corresponds to the brand specifying information acquired by the brand-specifying-information acquiring unit,
wherein the brand-specifying-information acquiring unit acquires a removal request for removing a tobacco product and the brand specifying information corresponding to the removal request,
wherein the projection controller causes the image projection unit to perform a removal notification display that prompts removal of the tobacco product from the accommodating area,
wherein the projection controller causes the image projection unit to display sales-terminal specifying information indicating which sales terminal, among a plurality of sales terminals that are set in a shop, is to be used to sell a tobacco product corresponding to the removal request, and
wherein the image projection unit displays the sales-terminal specifying information on, among the plurality of accommodating areas, the accommodating area that accommodates the tobacco product corresponding to the removal request.
